(19) **Europäisches Patentamt / European Patent Office / Office européen des brevets**

(11) **EP 4 660 276 A1**

(12) **EUROPEAN PATENT APPLICATION**
published in accordance with Art. 153(4) EPC

(43) Date of publication:
**10.12.2025 Bulletin 2025/50**

(21) Application number: **24750349.3**

(22) Date of filing: **31.01.2024**

(51) International Patent Classification (IPC):
*C09K 5/02* (2006.01)   *C08G 18/20* (2006.01)
*C08G 18/48* (2006.01)   *C08G 18/76* (2006.01)
*C09K 5/06* (2006.01)

(52) Cooperative Patent Classification (CPC):
**C08G 18/20; C08G 18/48; C08G 18/76; C09K 5/02;**
C09K 5/06; Y02E 60/10

(86) International application number:
**PCT/JP2024/003121**

(87) International publication number:
**WO 2024/162400 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 31.01.2023  JP 2023013169
22.03.2023  JP 2023044866
30.03.2023  JP 2023054830

(71) Applicant: **Mitsubishi Chemical Corporation**
**Tokyo 100-8251 (JP)**

(72) Inventors:
• **NISHIGUCHI, Kouji**
**Tokyo 100-8251 (JP)**
• **SATO, Shunsuke**
**Tokyo 100-8251 (JP)**
• **MAKI, Akira**
**Tokyo 100-8251 (JP)**
• **TAGUSAGAWA, Caio**
**Tokyo 100-8251 (JP)**
• **KOBAYASHI, Mitsuharu**
**Tokyo 100-8251 (JP)**
• **TAMURA, Sho**
**Tokyo 100-8251 (JP)**
• **KAWAI, Tomohiro**
**Tokyo 100-8251 (JP)**
• **ISHIHARA, Chizuko**
**Tokyo 100-8251 (JP)**

(74) Representative: **Vossius & Partner**
**Patentanwälte Rechtsanwälte mbB**
**Siebertstrasse 3**
**81675 München (DE)**

(54) **POLYURETHANE, METHOD FOR PRODUCING POLYURETHANE, HEAT STORAGE MATERIAL, ASSEMBLED BATTERY, AND CONSTRUCTION MATERIAL**

(57)   Disclosed is a polyurethane containing a structural unit (A) derived from an aromatic compound having an isocyanate group with an average number of functional groups of 2.1 or more and a structural unit (B) derived from a polyalkylene ether glycol. It is possible to provide a polyurethane for a heat storage material having good heat storage properties and heat resistance, excellent moldability, and good shape retainability against heating and cooling, a heat storage material containing the polyurethane, and a heat storage molded body.

Fig, 2

EP 4 660 276 A1

**Description**

Technical Field

The present invention relates to a polyurethane, a method for producing a polyurethane, a heat storage material, an assembled battery, and a construction material.

Background Art

Polyurethane includes thermoplastic polyurethane which is softened and melted by heating and then solidified by cooling, and thermosetting polyurethane which is cured by heating. Any of the polyurethanes has excellent elasticity, mechanical strength, low-temperature characteristics, abrasion resistance, weather resistance, and oil resistance, is also excellent in processability, and can be easily processed into various shapes, and therefore is widely used for industrial parts such as rolls and casters, automotive parts such as solid tires and belts, OA equipment parts such as paper feed rolls and copier rolls, and sports and leisure goods.

In recent years, a heat storage function, that is, a material containing polyurethane for a heat storage material having a small shape change with respect to an external temperature change and a heat storage molded body have attracted attention. For example, PTL 1 proposes a two-pack curing type polyurethane resin composition consisting of a main agent (A) containing a terminal isocyanate group-containing urethane prepolymer and a curing agent (B) containing microcapsules encapsulating the heat storage material and water as a coating agent having a heat storage action.

PTL 2 discloses a polyurethane foam having a permeation layer containing a phase transition material inside a polyurethane foam substrate as a polyurethane foam having a function of storing heat and cold (heat storage and cold storage).

PTL 3 discloses, as a heat storage urethane-based resin sheet-shaped molded body that can be used for a heat storage board, a heat storage material for an electronic device component, a cold insulator, a heat insulator, and the like, a molded body obtained by blending microcapsules encapsulating at least a heat storage agent in a specific urethane-based resin.

PTL 4 proposes a technique for producing a polyurethane by adding a phase change material in a step of producing a polyurethane.

PTL 5 discloses a panel-type unit device for heat storage floor heating having a heat storage function, which is configured to superimpose a planar electric resistance heating element on a heat storage element, in which a heater is arranged in a box-shaped wooden frame having a bottom plate and a power source member necessary for operation is connected and integrated.

Citation List

Patent Literature

PTL 1:JP 2014-129467 A
PTL 2:JP 2019-1973 A
PTL 3:JP 2009-79115 A
PTL 4:JP 2020-66738 A
PTL 5:JP 2000-240958 A

Summary of Invention

Technical Problem

The conventionally known polyurethane for a heat storage material, the heat storage material containing the polyurethane, and the molded body composed of the heat storage material (heat storage molded body) disclosed in PTLs 1 to 4 have insufficient heat storage performance and are likely to change in shape due to heating and cooling. Further, there is room for improvement in heat resistance, and additives and the like having a heat storage function are inevitably extracted and separated from the polyurethane for a heat storage material, and when the heat storage molded body is exposed to heating and cooling, poor appearance is likely to occur.

In addition, in the heat storage floor heating of PTL 5, since a heat storage material that cannot hold its shape is used, the heat storage material is filled in a sealed container. Therefore, there is a limitation on the shape and application to be used, and there is also a possibility that the enclosed heat storage material may leak out.

Therefore, in view of the above-described conventional techniques, a first object of the present invention is to provide a polyurethane for a heat storage material having good heat storage properties and heat resistance, excellent moldability, and good shape retainability against heating and cooling even without containing an additive having a heat storage function, or the like, a heat storage material containing the polyurethane, and a heat storage molded body.

In addition, a second object of the present invention is to provide a polyurethane having good shape retainability against heating, a heat storage molded body containing the polyurethane, an assembled battery, a battery pack, a method for producing a battery pack, a method for using an assembled battery, and a composition.

Furthermore, a third object of the present invention is to provide a polyurethane which has good heat storage properties and heat resistance even without containing an additive having a heat storage function, or the like, is excellent in moldability, and has good shape retainability against heating and cooling, a heat storage molded body containing the polyurethane, and a heat storage construction material and a planar heating device including the heat storage molded body.

Solution to Problem

In order to solve the above problem, the present inventors have conducted intensive studies based on the concept of becoming a non-fluid (solid) state by introducing chemical cross-linking and a polymer skeleton in which a crystal portion is generated in a molecular chain between cross-linking points, and as a result, they have found that a polyurethane containing a structural unit (A) derived from an aromatic compound having an isocyanate group with an average number of functional groups of 2.1 or more and a structural unit (B) derived from a polyalkylene ether glycol can solve the above problem.

That is, aspects of the present invention provide the following items [1] to [79].

[1] A polyurethane containing a structural unit (A) derived from an isocyanate and a structural unit (B) derived from a polyol.

[2] The polyurethane according to the item [I], in which the structural unit (A) includes a structural unit (A) derived from an isocyanate having an average number of functional groups of 2.1 or more.

[3] The polyurethane according to the item [1] or [2], in which the isocyanate of the structural unit (A) contains an aromatic compound having an isocyanate group.

[4] The polyurethane according to any one of the items [1] to [3], in which the structural unit (A) contains polymethylene polyphenyl polyisocyanate.

[5] The polyurethane according to any one of the items [1] to [4], in which a ratio of an isocyanate group equivalent (II) of the structural unit (A) to a hydroxy group equivalent (I) of the structural unit (B) is $0.4 \leq (II)/(I) \leq 1.2$.

[6] The polyurethane according to any one of the items [1] to [5], in which the structural unit (B) is a structural unit having a linear structure and having no unsaturated bond.

[7] The polyurethane according to any one of the items [1] to [6], in which the polyol of the structural unit (B) includes a polyalkylene ether glycol.

[8] The polyurethane according to any one of the items [1] to [7], in which the polyol of the structural unit (B) includes polyethylene glycol.

[9] The polyurethane according to any one of the items [1] to [8], in which the polyol of the structural unit (B) has a number-average molecular weight in a range of 1,000 or more and 10,000 or less, preferably 1,500 or more and 10,000 or less, more preferably 2,000 or more and 10,000 or less, further preferably 3,000 or more and 10,000 or less, and particularly preferably 4,000 or more and 10,000 or less.

[10] The polyurethane according to any one of the items [1] to [9], in which the polyol of the structural unit (B) has a melting point of 35 to 100°C, preferably 40 to 100°C, more preferably 50 to 100°C, and further preferably 55 to 100°C.

[11] The polyurethane according to any one of the items [1] to [10], in which the weight fraction of the structural unit (B) is 50% by weight or more and 99% by weight or less, preferably 60% by weight or more and 99% by weight or less, more preferably 70% by weight or more and 99% by weight or less, further preferably 80% by weight or more and 99% by weight or less, and particularly preferably 90% by weight or more and 99% by weight or less, based on the total weight of the structural units (A) and (B).

[12] The polyurethane according to any one of the items [1] to [11], further containing a catalyst (C).

[13] The polyurethane according to the item [12], in which two or more types of the catalysts (C) are included.

[14] The polyurethane according to the item [12] or [13], in which the catalyst is an organic catalyst, preferably a base catalyst, more preferably a catalyst containing at least one selected from an amine catalyst and an imidazole catalyst, and particularly preferably a catalyst containing at least one selected from triethylenediamine and imidazole.

[15] The polyurethane according to any one of the items [12] to [14], in which the catalyst (C) preferably contains 20,000 ppm or less of a metal, more preferably contains 10,000 ppm or less of a metal, further preferably contains 5,000 ppm or less of a metal, still further preferably 1,000 ppm or less of a metal, especially preferably contains 500 ppm or less of a metal, and particularly preferably contains 100 ppm or less of a metal.

[16] The polyurethane according to any one of the items [1] to [15], which is for a heat storage material.

[17] The polyurethane according to any one of the items [1] to [16], which exhibits a solid-solid phase transition.

[18] The polyurethane according to [17], in which an endothermic peak temperature in the solid-solid phase transition when the temperature is raised by differential scanning calorimetry is 30°C or higher and 90°C or lower, preferably 30°C or higher and 80°C or lower, more preferably 30°C or higher and 60°C or lower, and further preferably 50°C or higher and 80°C or lower.

[19] The polyurethane according to the item [17] or [18], in which an exothermic peak temperature in the solid-solid phase transition when the temperature is lowered by differential scanning calorimetry is 0°C or higher, preferably 20°C or higher, and further preferably 30°C or higher, and on the other hand, an exothermic peak temperature is 80°C or lower, preferably 60°C or lower, and further preferably 50°C or lower.

[20] The polyurethane according to any one of the items [1] to [19], in which the polyurethane exhibits a solid-solid phase transition, and the enthalpy at the solid-solid phase transition is 30 J/g or more, preferably 50 J/g or more, and more preferably 70 J/g or more.

[21] The polyurethane according to any one of the items [1] to [20], which is thermosetting.

[22] The polyurethane according to any one of the items [1] to [21], in which the polyurethane has a density of 1.0 to 10 g/cm$^3$.

[23] The polyurethane according to any one of the items [1] to [22], in which the polyurethane has a thermal conductivity of 0.2 to 5.0 W/(m·K), and preferably 0.25 to 5.0 W/(m·K).

[24] A polyurethane composition for a heat storage material, containing the polyurethane according to any one of the items [1] to [23].

[25] The polyurethane composition for a heat storage material according to the item [24], in which an endothermic peak temperature in the solid-solid phase transition when the temperature is raised by differential scanning calorimetry is 30°C or higher and preferably 50°C or higher, and is 90°C or lower, preferably 80°C or lower, and further preferably 60°C or lower.

[26] The polyurethane composition for a heat storage material according to the item [24] or [25], in which an exothermic peak temperature in the solid-solid phase transition when the temperature is lowered by differential scanning calorimetry is 0 to 80°C, the endotherm peak temperature in the solid-solid phase transition when the temperature is raised by differential scanning calorimetry is 30 to 90°C, and enthalpy in the solid-solid phase transition is 50 J/g or more.

[27] The polyurethane composition for a heat storage material according to any one of the items [24] to [26], in which an exothermic peak temperature in the solid-solid phase transition when the temperature is lowered by differential scanning calorimetry is 0°C or higher, preferably 20°C or higher, and further preferably 30°C or higher, and is 80°C or lower, preferably 60°C or lower, and further preferably 50°C or lower.

[28] The polyurethane composition for a heat storage material according to any one of the items [24] to [27], in which an exothermic peak temperature in the solid-solid phase transition when the temperature is lowered by differential scanning calorimetry is 0 to 80°C, an endotherm peak temperature in the solid-solid phase transition when the temperature is raised by differential scanning calorimetry is 30 to 90°C, and an enthalpy change in the solid-solid phase transition is 30 J/g or more.

[29] The polyurethane composition for a heat storage material according to any one of the items [24] to [28], further containing an antioxidant.

[30] The polyurethane composition for a heat storage material according to the item [29], in which a content of the antioxidant is 0.05 to 3% by mass with respect to a total amount of the composition.

[31] The polyurethane composition for a heat storage material according to the item [29] or [30], in which the antioxidant is a phenol-based antioxidant.

[32] The polyurethane composition for a heat storage material according to any one of the items [24] to [31], in which a rate of change ΔH of enthalpy at a peak derived from the polyurethane for a heat storage material after being treated at 100°C for 200 hours is 10% or less.

[33] The polyurethane composition for a heat storage material according to any one of the items [24] to [32], further containing a filler.

[34] The polyurethane composition for a heat storage material according to any one of the items [24] to [33], in which a content of the filler is 0.1 to 60% by mass, preferably 0.1 to 50% by mass, and further preferably 0.1 to 40% by mass, with respect to a total amount of the composition.

[35] A composition containing an isocyanate (a) having an average number of functional groups of 2.1 or more and a polyol (b).

[36] The composition according to the item [35], in which the isocyanate (a) includes an aromatic compound having an isocyanate group.

[37] The composition according to the item [36], in which the aromatic compound includes polymethylene polyphenyl polyisocyanate.

[38] The composition according to any one of the items [35] to [37], in which a ratio of an isocyanate group equivalent (II) of the isocyanate (a) to a hydroxy group equivalent (I) of the polyol (b) is $0.4 \leq \text{(II)/(I)} \leq 1.2$.

[39] The composition according to any one of the items [35] to [38], in which the polyol includes a polyalkylene ether glycol.

[40] The composition according to the item [39], in which the polyol includes polyethylene glycol.

[41] The composition according to any one of the items [35] to [40], in which the polyol (b) has a number-average molecular weight of 1,000 or more and 10,000 or less, preferably 1,500 or more and 10,000 or less, further preferably 2,000 or more and 10,000 or less, further more preferably 3,000 or more and 10,000 or less, and particularly preferably 4,000 or more and 10,000 or less.

[42] The composition according to any one of the items [35] to [41], in which the polyol (b) has a melting point of 35 to 100°C, preferably 40 to 100°C, more preferably 50 to 100°C, and further preferably 55 to 100°C.

[43] The composition according to any one of the items [35] to [42], in which the weight fraction of the polyol (b) is 50% by weight or more and 99% by weight or less, preferably 60% by weight or more and 99% by weight or less, more preferably 70% by weight or more and 99% by weight or less, further preferably 80% by weight or more and 99% by weight or less, and particularly preferably 90% by weight or more and 99% by weight or less, based on the total weight of the isocyanate (a) and the polyol (b).

[44] The composition according to any one of the items [35] to [43], further containing a catalyst (C).

[45] The composition according to the item [44], in which two or more types of the catalysts (C) are included.

[46] The composition according to the item [44] or [45], in which the catalyst is an organic compound, preferably a basic compound, more preferably a nitrogen-containing compound, and further preferably at least one selected from triethylenediamine and imidazole.

[47] The composition according to any one of the items [44] to [46], in which the catalyst (C) contains 20,000 ppm or less of a metal, preferably contains 10,000 ppm or less of a metal, more preferably contains 5,000 ppm or less of a metal, further preferably 1,000 ppm or less of a metal, still further preferably contains 500 ppm or less of a metal, and particularly preferably contains 100 ppm or less of a metal.

[48] The composition according to any one of the items [44] to [47], further containing an antioxidant.

[49] The composition according to any one of the items [44] to [48], further containing a filler.

[50] The composition according to any one of the items [44] to [49], in which a content of the filler is 0.1 to 60% by mass, preferably 0.1 to 50% by mass, and further preferably 0.1 to 40% by mass, with respect to 100% by mass of the composition.

[51] A method for producing a polyurethane, including mixing an aromatic compound having an isocyanate group with an average number of functional groups of 2.1 or more, a polyalkylene ether glycol, and a catalyst to obtain a polyurethane.

[52] A heat storage construction material including a heat storage material installed around a heat source, in which the heat storage material includes the polyurethane composition for a heat storage material according to any one of the items [24] to [34].

[53] The heat storage construction material according to the item [52], in which the heat source is a heat medium and a heat medium heat circulation pipe, or an electric heating wire and a heat medium circulation pipe connected to a heat source.

[54] The heat storage construction material according to the item [52] or [53], in which the heat source is located under a floor or on a wall surface of a building.

[55] The heat storage construction material according to any one of the items [52] to [54], in which the heat storage construction material includes a heat storage material installed around a heat source, and the heat storage material includes the heat storage material according to any one of the items [24] to [34].

[56] A central heating or heating facility including the heat storage construction material according to any one of the items [52] to [55].

[57] A planar heating device including a heat storage molded body containing the polyurethane for a heat storage material according to any one of the items [24] to [34].

[58] The planar heating device according to the item [59], further including an electric heating wire, in which a heat storage material is provided around the electric heating wire.

[59] An on-vehicle seat including a heat storage molded body containing the polyurethane for a heat storage material according to any one of the items [24] to [34].

[60] The on-vehicle seat according to the item [59], further including an electric heating wire, in which a heat storage material is provided around the electric heating wire.

[61] An assembled battery including a plurality of unit cells, and a heat storage molded body containing the polyurethane for a heat storage material according to any one of the items [24] to [34], the heat storage molded body being in contact with the unit cells.

[62] The assembled battery according to the item [61], in which the heat storage molded body exhibits an endotherm peak temperature in a range of 30 to 80°C when the temperature is raised by differential scanning calorimetry, and a distance between any two unit cells is 1.0 mm or more, preferably 1.5 mm or more, more preferably 2.0 mm or more, and further preferably 2.5 mm or more.

[63] The assembled battery according to the item [61] or [62], in which the unit cell is a cylindrical battery.

[64] A battery pack in which the assembled battery according to any one of the items [61] to [63] is housed in a housing.

[65] The battery pack according to the item [64], in which the heat storage molded body has a continuous structure in the housing.

[66] The battery pack according to the item [64] or [65], further including a heat transfer plate, in which the heat transfer plate is in contact with the unit cell and the heat storage molded body.

[67] The battery pack according to any one of the items [64] to [66], in which the heat transfer plate is disposed at a bottom of the heat storage material.

[68] A method for producing an assembled battery including a plurality of unit cells disposed in a housing, the method including heating at least one of the housing and the unit cells, and filling the housing with a composition, in which the composition is the composition according to any one of the items [44] to [50].

[69] The method for producing an assembled battery according to the item [68], including adjusting so that F in Equation (I) defined by a viscosity (Pa·s) of the composition at the time of filling the composition, a filling volume flow rate (m$^3$/s), and a minimum value (m) of a distance between centers of batteries disposed in a housing is 1.5 N or less:

$$F = \text{(viscosity of composition)}^{0.53} \times \text{(filling volume flow rate)}^{0.62}/\text{(minimum value of distance between a plurality of batteries disposed in housing)}^{1.3} \quad \text{(I).}$$

[70] The method for producing an assembled battery according to the item [68] or [69], including: using a polyol having a viscosity at 25°C of 1.0 Pa·s or less, preferably using a crystalline polyol having a viscosity at 25°C of 0.8 Pa·s or less, more preferably using a polyol having a viscosity at 25°C of 0.6 Pa·s or less, further preferably using a polyol having a viscosity at 25°C of 0.4 Pa·s or less, and particularly preferably using a polyol having a viscosity at 25°C of 0.2 Pa·s or less.

[71] The method for producing an assembled battery according to any one of the items [68] to [70], in which the composition becomes a phase change material after curing.

[72] The method for producing an assembled battery according to any one of the items [68] to [71], in which the phase change material has an endothermic peak temperature, and the endothermic peak temperature when the temperature is raised by differential scanning calorimetry is 30 to 90°C, and preferably 50 to 80°C.

[73] The method for producing an assembled battery according to any one of the items [68] to [72], in which the composition fills 50% or more, preferably 60% or more, more preferably 70% or more, and further preferably 80% or more, and fills 100% or less, preferably 97% or less, more preferably 95% or less, further preferably 90% or less, and particularly preferably 85% or less, with respect to 100% of the height of the battery.

[74] The method for producing an assembled battery according to any one of the items [68] to [73], including adjusting the F so that an angle θ1 calculated by any one of the following Equation (3) and Equation (4) is a threshold angle θ2 or less:

(when 0° ≤ θ1 < 3°)
F = 1.31 × 10$^{-1}$ × (the angle of the gradient formed by the composition with respect to the bottom surface of the battery pack at the time of filling the composition: θ1) - 1.44 × 10$^{-2}$ Equation (3);
(when θ1 ≥ 3°)

F = 3.93 × 10$^{-2}$ × (the angle of the gradient formed by the composition with respect to the bottom surface of the battery pack at the time of filling the composition: θ1) - 5.02 × 10$^{-2}$ Equation (4);
in which the threshold angle θ2 is represented by arctan(X/Y), X is a distance between a foot of a perpendicular line from the nozzle tip point to the bottom surface of the battery pack and a foot of a perpendicular line from the foot of the perpendicular line to a bisecting plane in the direction of the short side of the battery pack, and Y is a height of the cylindrical battery;
θ1 is preferably 40° or less, more preferably 35° or less, further preferably 30° or less, further more preferably 25° or less, more preferably 20° or less, still more preferably 15° or less, and particularly preferably 12° or less.

[75] The method for producing an assembled battery according to any one of the items [68] to [74], further including heating the composition to a temperature equal to or higher than a melting point of the crystalline polyol.

[76] The method for producing an assembled battery according to the item [75], in which the heating is performed at 20 to 120°C, preferably 40 to 120 °C, and further preferably 60 to 120°C.

[77] The method for producing an assembled battery according to any one of the items [68] to [76], further including a step of making a filling volume flow rate of the composition to be $2.0 \times 10^{-7}$ m$^3$/s or less, preferably $1.0 \times 10^{-7}$ m$^3$/s or less, further preferably $0.5 \times 10^{-7}$ m$^3$/s or less, and particularly preferably $0.2 \times 10^{-7}$ m$^3$/s or less.

[78] The method for producing an assembled battery according to any one of the items [68] to [77], further including a step of setting the distance between the batteries to 1.0 to 4.0 mm, preferably 1.0 to 3.0 mm, and further preferably 1.0 to 2.0 mm.

[79] The method for producing an assembled battery according to any one of the items [68] to [78], in which the housing is filled with the composition from at least two positions.

Advantageous Effects of Invention

According to the present invention, it is possible to provide a polyurethane for a heat storage material having good heat storage properties and heat resistance, excellent moldability, and good shape retainability against heating and cooling, a heat storage material containing the polyurethane, and a heat storage molded body.

In addition, it is possible to provide a polyurethane which has good heat storage properties and heat resistance even without containing an additive or the like having a heat storage function, is excellent in moldability, and has good shape retainability against heating and cooling, a heat storage molded body containing the polyurethane, an assembled battery, a battery pack, a method for producing a battery pack, a method for using an assembled battery, and a composition.

Furthermore, it is possible to provide a polyurethane having good heat storage properties and heat resistance even without containing an additive or the like having a heat storage function, having excellent moldability, and having good shape retainability against heating and cooling, a heat storage molded body containing the polyurethane, and a heat storage construction material and a planar heating device including the heat storage molded body.

Brief Description of Drawings

[Fig. 1] Fig. 1 is a diagram showing a DSC curve during temperature raising in Example 1.
[Fig. 2] Fig. 2 is a diagram showing a DSC curve during temperature lowering in Example 1.
[Fig. 3] Fig. 3 is a diagram showing a building model in which a heat storage material is installed in Example 17.
[Fig. 4] Fig. 4 is a plan view showing an example of a unit cell constituting an assembled battery.
[Fig. 5] Fig. 5 is a front view of the unit cell of Fig. 4.
[Fig. 6] Fig. 6 is a right side view of the unit cell of Fig. 4.
[Fig. 7] Fig. 7 is a top view of an assembled battery formed by using a plurality of unit cells.
[Fig. 8] Fig. 8 is a side view schematically showing a state in which a side plate is removed from an assembled battery.
[Fig. 9] Fig. 9 is a model used in a simulation.
[Fig. 10] Fig. 10 is a diagram illustrating a battery pack.
[Fig. 11] Fig. 11 is a snapshot of potting in a simulation.
[Fig. 12] Fig. 12 is a cross-sectional view of a battery pack.
[Fig. 13] Fig. 13 is a cross-sectional view of a battery pack.
[Fig. 14] Fig. 14 is a plan view of a battery pack.

Hereinafter, embodiments of the present invention will be described in detail, but the present invention is not limited to the following embodiments, and can be carried out by various modifications within the scope of the gist thereof. In addition, in the description herein, when the expression "to" is used, it is used to include numerical values or physical values described before and after the expression. In addition, numerical values or physical values described as an upper limit and a lower limit are used to include the values. In addition, in the description herein, "part by weight" and "part by mass", and "% by weight" and "% by mass" have substantially the same meaning.

The term "enthalpy" means an amount of change in enthalpy in a solid-solid phase transition.

The term "enthalpy of fusion" means an amount of change in enthalpy in a solid-solid phase transition during temperature raising.

The term "endothermic peak temperature" means a peak temperature in the solid-solid phase transition when the temperature is raised by differential scanning calorimetry.

The term "exothermic peak temperature" means a peak temperature in the solid-solid phase transition when the temperature is lowered by differential scanning calorimetry.

The term "distance between batteries" means a distance between exterior bodies of a line segment connecting centers of gravity of two adjacent batteries.

The term "solid-solid phase transition" means a phase transition from a solid phase to a non-fluid state. It also includes a phase transition from a solid phase to an intermediate phase between a solid phase and a liquid phase as long as it becomes a non-fluid state.

The term "structural unit" means a structure derived from any one of isocyanate and polyol rather than one urethane bond in a polymer structure.

The term "average number of functional groups" means the number of isocyanate groups contained in one isocyanate compound forming a structural unit.

[1. Polyurethane]

[1-1. Polyurethane Having Specific Structure]

The polyurethane according to one aspect of the present invention (hereinafter, also referred to as a phase change material) preferably contains a structural unit (A) derived from an isocyanate having an average number of functional groups of 2.1 or more and a structural unit (B) derived from a crystalline polyol. Further, the polyurethane may contain a catalyst described later in [2. Composition]. The polyurethane is qualitatively evaluated by confirming the presence or absence of a peak derived from a structural unit by infrared spectroscopy (ATR method) on a polymer sample. In addition, the polyurethane according to one aspect of the present invention is preferably a polyurethane containing a structural unit (A) derived from an aromatic compound having an isocyanate group with an average number of functional groups of 2.1 or more and a structural unit (B) derived from a polyalkylene ether glycol, in which the polyurethane has an exothermic peak temperature at 0 to 50°C.

<Isocyanate>

The isocyanate used to obtain the polyurethane of the present invention is an isocyanate having an average number of functional groups of 2.1 or more. The isocyanate is not particularly limited as long as the isocyanate has an isocyanate group having an average number of functional groups of 2.1 or more, and examples thereof include known polyisocyanate compounds such as aliphatic compounds and aromatic compounds (hereinafter, sometimes referred to as "aromatic polyisocyanate compounds"). From the viewpoint of controlling the curing time, the isocyanate is preferably an aromatic compound. In the case of a pre-reaction isocyanate before obtaining a polyurethane, the average number of functional groups of the isocyanate group can be determined by $^1$H-NMR or $^{13}$C-NMR after blocking with an alcohol such as dehydrated methanol as a pre-treatment and dissolving in a highly polar deuterated solvent such as deuterated chloroform.

As another means, it can be calculated from the isocyanate (NCO) content by the following Equation. The isocyanate content can be determined by back titration with dibutylamine as specified in JIS-K1603 B method.

(Average number of functional groups of isocyanate group) = (NCO content) $\times$ 4.2/1000 $\times$ (molecular weight)

In addition, the average number of functional groups of the isocyanate group after the reaction in the polyurethane of the present invention is quantified by $^1$H-NMR measurement for a sample containing a hydrolysate of the polymer and a deuterated solvent. The average number of functional groups is calculated by assigning the structure by $^1$H-NMR. For example, in the case of polymethylene polyphenyl polyisocyanate described later, it is calculated from the ratio of the peak area corresponding to terminal amine to the peak area corresponding to methylene.

The average number of functional groups of the isocyanate is 2.1 or more from the viewpoint of allowing the polyurethane obtained by the introduction of crosslinking points to become non-fluid (solid) state. Furthermore, it is preferably 2.2 or more, and more preferably 2.3 or more.

Examples of the aromatic polyisocyanate compound include polymethylene polyphenyl polyisocyanate (polymeric MDI), an adduct obtained by adding a polyhydric alcohol to xylylene diisocyanate (XDI), an adduct obtained by adding a polyhydric alcohol to toluene diisocyanate (2,4-toluene diisocyanate, 2,6-toluene diisocyanate, hereinafter referred to as TDI), and an isocyanurate and a biuret derived from TDI.

Among these, the aromatic polyisocyanate compound is more preferably polymethylene polyphenyl polyisocyanate from the viewpoint of high reactivity with the crystalline polyol and high curability of the polyurethane to be obtained, and from the viewpoint of being industrially inexpensively available in a large amount.

In addition, the aromatic polyisocyanate compound of the present invention may have a structural unit derived from an aromatic compound having a bifunctional diisocyanate group as long as the physical properties are not impaired. Examples of the aromatic compound having a bifunctional diisocyanate group include aromatic diisocyanate compounds such as xylylene diisocyanate, 4,4'-diphenyl diisocyanate, toluene diisocyanate (2,4-toluene diisocyanate, 2,6-toluene diisocyanate), m-phenylene diisocyanate, p-phenylene diisocyanate, 4,4'-diphenylmethane diisocyanate, 4,4'-diphenyldimethylmethane diisocyanate, 4,4'-dibenzyl diisocyanate, dialkyldiphenylmethane diisocyanate, tetraalkyldiphenylmethane diisocyanate, 1,5-naphthylene diisocyanate, 3,3'-dimethyl-4,4'-biphenylene diisocyanate, polymethylene polyphenyl isocyanate, phenylene diisocyanate, and m-tetramethylxylylene diisocyanate.

These may be used alone or in combination of two or more kinds thereof.

<Crystalline Polyol>

The crystalline polyol is a hydroxy compound having one or more ether bonds in a main skeleton in the molecule. Examples of the crystalline polyol include a polyalkylene ether glycol. The repeating unit in the main skeleton may be any of saturated hydrocarbons or unsaturated hydrocarbons, and may be linear, branched, or cyclic, but from the viewpoint of improving heat storage properties, saturated hydrocarbons are preferable, and linear is preferable. That is, the structural unit (B) is preferably a linear structure and preferably a structure having no unsaturated bond.

The melting point of the crystalline polyol is preferably 35°C or higher and 100°C or lower. When the melting point is within the above range, the heat storage properties of the polyurethane becomes good. From the viewpoint of improving this effect, the lower limit is more preferably 40°C, further preferably 45°C, especially preferably 50°C, particularly preferably 55°C, and most preferably 60°C.

Examples of the repeating unit in the main skeleton include a 1,2-ethylene glycol unit, a 1,2-propylene glycol unit, a 1,3-propanediol (trimethylene glycol) unit, a 2-methyl-1,3-propanediol unit, a 2,2-dimethyl-1,3-propanediol unit, a 1,4-butanediol (tetramethylene glycol) unit, a 2-methyl-1,4-butanediol unit, a 3-methyl-1,4-butanediol unit, a 3-methyl-1,5-pentanediol unit, a neopentyl glycol unit, a 1,6-hexanediol unit, a 1,7-heptanediol unit, a 1,8-octanediol unit, a 1,9-nonanediol unit, a 1,10-decanediol unit, and a 1,4-cyclohexanedimethanol unit.

Among these, from the viewpoint of improving the heat storage properties, heat resistance, and moldability (hereinafter, also referred to as "heat storage properties and the like") of the polyurethane, it is preferable to include polyethylene glycol in which a repeating unit is a 1,2-ethylene glycol unit. In other words, it is preferable that the polyalkylene ether glycol includes polyethylene glycol. From the viewpoint of further improving the effects of the heat storage properties and the like, the content of the polyethylene glycol is preferably 70% by weight or more, more preferably 80% by weight or more, further preferably 90% by weight or more, and particularly preferably 100% by weight with respect to the total amount of the polyalkylene ether glycol.

The number-average molecular weight of the structural unit (B) is preferably in a range of 1,000 or more and 10,000 or less. When the number-average molecular weight is within the above range, the polyurethane has good heat storage properties and heat resistance, and is excellent in moldability. From the viewpoint of improving this effect, the lower limit is more preferably 1,500, further preferably 2,500, particularly preferably 2,700, and especially preferably 3,000. From the same viewpoint, the upper limit is more preferably 9,000, further preferably 6,000, and particularly preferably 4,000. The number-average molecular weight of the structural unit (B) derived from the polyalkylene ether glycol can be determined from the hydroxyl value obtained by the acetic anhydride pyridine method.

From the viewpoint of efficiently absorbing heat of the battery, the number-average molecular weight of the structural unit (B) is more preferably 1,500 or more and 10,000 or less, further preferably 2,000 or more and 10,000 or less, still further preferably 3,000 or more and 10,000 or less, especially preferably 3,400 or more and 10,000 or less, and particularly preferably 4,000 or more and 10,000 or less.

In addition, in the polyurethane of the present invention, the weight fraction of the structural unit (B) is preferably 50% by weight or more and 99% by weight or less based on the total weight of the structural unit (A) and the structural unit (B). When the weight fraction of the structural unit (B) based on the total weight of the structural unit (A) and the structural unit (B) is within the above range, the enthalpy of fusion can be maximized. From the viewpoint of improving this effect, the lower limit is preferably 60% by weight, more preferably 70% by weight, further preferably 80% by weight, and still further preferably 90% by weight, and the upper limit is preferably 98% by weight.

In the polyurethane, the ratio of the isocyanate group equivalent (II) of the structural unit (A) derived from an aromatic compound having an isocyanate group with an average number of functional groups of 2.1 or more to the hydroxy group equivalent (I) of the structural unit (B) derived from a crystalline polyol is preferably $0.4 \leq (II)/(I) \leq 1.2$. When the ratio of the aromatic isocyanate to the crystalline polyol is within the above range, a polyurethane having good heat storage properties and shape retainability after melting can be obtained. From the viewpoint of improving this effect, the lower limit is preferably 0.65, more preferably 0.70, and further preferably 0.80. From the same viewpoint, the upper limit is preferably 1.10, more preferably 1.05, and further preferably 1.00. The ratio of the aromatic isocyanate to the crystalline polyol can be determined by nuclear magnetic resonance (NMR) analysis.

The number-average molecular weight of the structural unit (B) derived from the polyalkylene ether glycol is preferably 1,000 or more and 10,000 or less. When the number-average molecular weight is within the above range, the polyurethane has good heat storage properties and heat resistance, and is excellent in moldability. From the viewpoint of improving this effect, the lower limit is preferably 2,500, more preferably 2,700, and further preferably 3,000. From the same viewpoint, the upper limit is preferably 9,000, more preferably 6,000, and further preferably 4,000. The number-average molecular weight of the structural unit (B) derived from the polyalkylene ether glycol is determined quantitatively by gel permeation chromatography on a solution containing a hydrolyzate of the polymer. A "Waters Alliance 2695, 2414 (refractometer), 2996 (PDA)" manufactured by Waters Corporation equipped with a gel permeation chromatograph to which a photodiode array (PDA) detector is connected is used. A calibration curve of the number-average molecular weight and the retention time is prepared using sodium polystyrene sulfonate having a peak top molecular weight of 206, 4,300, 6,800, 17,000, 32,000, 77,000, 15,000, or 2,600,000 as a standard sample. The retention time of the obtained chromatogram is converted into the number-average molecular weight in terms of sodium polystyrene sulfonate.

[1-2. Polyurethane Having Specific Physical Properties]

The polyurethane according to one aspect of the present invention exhibits a solid-solid phase transition. Generally, the solid-solid phase transition includes an exothermic phase transition and an endothermic phase transition. The exothermic phase transition temperature can be confirmed from an exothermic peak temperature in differential scanning calorimetry, and the endothermic phase transition temperature can be confirmed from an endothermic peak temperature in differential scanning calorimetry.

The exothermic peak temperature of the polyurethane of the present invention is preferably 0°C or higher and 80°C or lower. The lower limit of the exothermic peak temperature is more preferably 20°C, more preferably 25°C, and further preferably 30°C. On the other hand, the upper limit thereof is more preferably 75°C, further preferably 70°C, particularly preferably 65°C, especially preferably 60°C, and most preferably 50°C. When the exothermic peak temperature is within the above range, heat storage and cold storage can be efficiently performed.

From the viewpoint of efficiently absorbing heat from the battery, the exothermic peak temperature is preferably 0 to 80°C, and more preferably 30 to 60°C.

From the viewpoint of controlling the exothermic peak temperature, the polyurethane is preferably a thermosetting polyurethane.

The measurement of the exothermic peak temperature is performed using a differential scanning calorimeter. Specifically, it is carried out as follows. First, by heating in a nitrogen atmosphere, an aluminum pan in which about 5 mg of a sample is sealed is heated from room temperature to a predetermined temperature at a temperature raising rate of 1°C/min and held for 1 minute. Then, the sample is cooled to -10°C at a temperature lowering rate of 1°C/min. The exothermic peak temperature can be determined from the DSC curve obtained by this temperature lowering. Specifically, the maximum point of the exothermic curve in a range of 20°C to 80°C is determined, and the temperature at this maximum point is taken as the exothermic peak temperature.

The endothermic peak temperature of the polyurethane is preferably 30°C or higher and 90°C or lower. The lower limit of the endothermic peak temperature is more preferably 35°C, further preferably 40°C, and particularly preferably 50°C. On the other hand, the upper limit thereof is more preferably 85°C, further preferably 80°C, particularly preferably 75°C, and especially preferably 70°C. When the endothermic peak temperature is within the above range, heat storage and cold storage can be efficiently performed.

From the viewpoint of efficiently absorbing heat from the battery, the endothermic peak temperature is preferably 30 to 90°C, and more preferably 50 to 80°C.

Also from the viewpoint of controlling the endothermic peak temperature, the polyurethane is preferably a thermosetting polyurethane.

In addition, from the viewpoint of shape retainability, it is preferable to include a temperature region in which the polyurethane is solid at a temperature equal to or higher than the endothermic peak temperature, and for example, the polyurethane is preferably solid in a temperature range of 50 to 200°C. Here, the term "solid" means that the gel fraction is 70% or more.

In other words, it is preferable to exhibit an endothermic phase transition during temperature raising at the above temperature.

The polyurethane is produced by adjusting the ratio of the aromatic isocyanate to the polyalkylene ether glycol to fall within a predetermined range, when a composition containing an aromatic polyisocyanate compound and a polyalkylene ether glycol as raw materials is used, for example. The adjustment of the aromatic isocyanate/polyalkylene ether glycol ratio is performed by, for example, adjusting the use ratio between the aromatic polyisocyanate compound and the polyalkylene ether glycol.

The measurement of the endothermic peak temperature is performed using a differential scanning calorimeter (DSC). Specifically, it is carried out as follows. First, by heating in a nitrogen atmosphere, an aluminum pan in which about 5 mg of a sample is sealed is heated to a predetermined temperature at a temperature raising rate of 1°C/min and held for 1 minute. Then, the sample is cooled to -10°C at a temperature lowering rate of 1°C/min and held for 1 minute. Thereafter, the temperature is raised again to a predetermined temperature at a temperature raising rate of 1°C/min. The endothermic peak temperature can be determined from the DSC curve obtained in the second temperature raising. Specifically, the minimum point of the endothermic curve in a range of 30°C to 90°C is determined, and the temperature at this minimum point is taken as the endothermic peak temperature.

The polyurethane preferably has an enthalpy of fusion of 50 J/g or more, more preferably 70 J/g or more, further preferably 72 J/g or more, and particularly preferably 74 J/g or more, as measured at 30°C or higher and 90°C or lower by differential scanning calorimetry. The upper limit of the enthalpy of fusion is not particularly limited, but is preferably 150 J/g or less.

From the same viewpoint, the enthalpy of fusion per unit density as measured at 30°C or higher and 90°C or lower by differential scanning calorimetry is preferably 50 $J/cm^3$ or more, more preferably 70 $J/cm^3$ or more, further preferably 72 $J/cm^3$ or more, and particularly preferably 74 $J/cm^3$ or more. The upper limit of the enthalpy of fusion is not particularly limited, but is preferably 150 $J/cm^3$ or less.

The enthalpy of fusion refers to heat of fusion in a portion within a temperature range of 30°C or higher and 90°C or lower in a melting curve measured by differential scanning calorimetry, and is obtained by, for example, the following method.

The enthalpy of fusion is measured using a differential scanning calorimeter in the same manner as the endothermic peak temperature. The specific measurement is also performed in the same manner as in the endothermic peak temperature. Then, the DSC data (DSC curve) obtained in the second temperature raising is used as a measurement curve. The measurement point at 30°C and the measurement point at 90°C in the measurement curve are connected by a straight line. The total amount of the portion on the endothermic side from the straight line (the total amount is represented by the area of the region surrounded by the straight line and the DSC curve) is taken as the enthalpy of fusion. When there is no peak in the measurement curve between 30°C and 90°C, the enthalpy of fusion is regarded as 0.

From the viewpoint of increasing the thermal conductivity, the density of the polyurethane is preferably 1.0 to 10 $g/cm^3$, and more preferably 2 to 8 $g/cm^3$.

From the viewpoint of increasing the density, the polyurethane is preferably a non-foamed polyurethane.

In addition, from the viewpoint of enhancing the heat storage performance, the thermal conductivity of the polyurethane is preferably 0.2 to 5.0 W/(m·K), and more preferably 1.0 to 3.0 W/(m·K).

In the production of the polyurethane of the present invention, a catalyst can be used. The catalyst is not particularly limited as long as it can produce a polyurethane, but the following catalyst (C) is suitably exemplified.

[2. Composition]

A composition suitable for producing the polyurethane of the present invention (hereinafter, also referred to as a potting material) will be described below. The composition contains an isocyanate (A) having an average number of functional groups of 2.1 or more and a crystalline polyol (B). The composition may further contain a catalyst (C).

Preferred aspects of the isocyanate (A) having an average number of functional groups of 2.1 or more and the crystalline polyol (B) contained in the composition are the same as those described in [1. Polyurethane].

The composition may further contain an antioxidant, a filler, and the like, which will be described later, and preferred aspects thereof are the same as those described in [4. Polyurethane Composition for Heat Storage Material].

<Catalyst (C)>

The catalyst (C) used for producing the polyurethane of the present invention is preferably an organic catalyst, and examples thereof include amines and imidazoles. When an aromatic polyisocyanate compound is used, the activity of the urethanization reaction can be improved by using an organic catalyst, and the curing time and productivity during production can be controlled.

As the organic catalyst, for example, a base catalyst (basic compound) such as an amine catalyst such as triethylenediamine, triethylamine, or N-ethylmorpholine, or an imidazole catalyst such as 1,2-dimethylimidazole, or an acid catalyst such as acetic acid, phosphoric acid, sulfuric acid, hydrochloric acid, or sulfonic acid can be used. Among these, a base catalyst is preferable, a nitrogen-containing compound is more preferable, at least one of an amine catalyst and an imidazole catalyst is more preferable, and at least one of triethylenediamine and imidazole is preferable. The catalyst may be used alone or may be used in combination of two or more types thereof.

From the viewpoint of controlling the curing time, two or more types of the organic catalysts are preferably contained.

In addition, the addition amount of the catalyst is preferably 10 ppm or more and 1,000 ppm or less with respect to 100 parts by weight of the total solid content in the composition for producing the polyurethane of the present invention (details will be described later). When the addition amount of the catalyst is within the above range, the polyurethane can be efficiently produced.

In a case where a metal catalyst is used in combination, from the viewpoint of controlling the curing time, the content of a metal is preferably 20,000 ppm or less, preferably 10,000 ppm or less, more preferably 5,000 ppm or less, more preferably 1,000 ppm or less, more preferably 500 ppm or less, and more preferably 100 ppm or less, with respect to 100 parts by weight of the total solid content or the composition.

From the viewpoint of maximizing enthalpy, in the composition of the present invention, the weight fraction of the crystalline polyol (B) is preferably 50 to 99% by weight, and more preferably 60 to 98% by weight, with respect to the total weight of the aromatic compound (A) having an isocyanate having an average number of functional groups of 2.1 or more, the crystalline polyol (B), and the catalyst (C).

In addition to the above-described components (A), (B) and (C), a glycol or a polyamine may be added to the composition of the present invention as a chain extender within a range that does not affect the physical properties.

Specific examples thereof include linear diols such as ethylene glycol, 1,3-propanediol, 1,4-butanediol, 1,5-pentanediol, 1,6-hexanediol, 1,8-octanediol, 1,9-nonanediol, 1,10-decanediol, and 1,12-dodecanediol; diols having a branched chain such as 2-methyl-1,3-propanediol, 2,2-dimethyl-1,3-propanediol, 2,2-diethyl-1,3-propanediol, 2-methyl-2-propyl-1,3-propanediol, 2,4-heptanediol, 1,4-dimethylolhexane, 2-ethyl-1,3-hexanediol, 2,2,4-trimethyl-1,3-pentanediol, 2-methyl-1,8-octanediol, 2-butyl-2-ethyl-1,3-propanediol, and dimer diol; diols having an ether group such as diethylene glycol and propylene glycol; diols having an alicyclic structure such as 1,4-cyclohexanediol, 1,4-cyclohexanedimethanol, and 1,4-dihydroxyethylcyclohexane; diols having an aromatic group such as xylylene glycol, 1,4-dihydroxyethylbenzene, and 4,4'-methylenebis(hydroxyethylbenzene); polyols such as glycerin, trimethylolpropane, and pentaerythritol; hydroxyamines such as N-methylethanolamine and N-ethylethanolamine; and polyamines such as ethylenediamine, 1,3-diaminopropane, hexamethylenediamine, triethylenetetramine, diethylenetriamine, isophoronediamine, 4,4'-diaminodicyclohexylmethane, 2-hydroxyethylpropylenediamine, di-2-hydroxyethylethylenediamine, di-2-hydroxyethylpropylenediamine, 2-hydroxypropylethylenediamine, di-2-hydroxypropylethylenediamine, 4,4'-diphenylmethanediamine, methylenebis(o-chloroaniline), xylylenediamine, diphenyldiamine, tolylenediamine, hydrazine, piperazine, and N,N'-diaminopiperazine.

These glycols or polyamines may be used alone or in combination of two or more kinds thereof.

[3. Use of Polyurethane]

Since the polyurethane of the present invention is excellent in heat storage properties, heat resistance, moldability, shape retainability, and the like, it is suitably used as a material for a heat storage material (heat storage material).

[4. Polyurethane Composition for Heat Storage Material]

The polyurethane composition for a heat storage material according to the present invention may contain, for example, a polyurethane for a heat storage material and other components. Here, as the polyurethane for a heat storage material, the polyurethane described above can be suitably used. Examples of the other components include additives and resins other than the polyurethane for a heat storage material (hereinafter, appropriately referred to as "other resins"). Specifically, various additives can be added to the polyurethane for a heat storage material as long as the effects are not impaired. Examples of the additive include a phase change material different from the above-described polyurethane, an antioxidant, a heat stabilizer, a light stabilizer, an ultraviolet absorber, a filler, a neutralizer, a lubricant, an antifogging agent, an antiblocking agent, a slip agent, a dispersant, a colorant, a flame retardant, an antistatic agent, a conductivity imparting agent, a crosslinking agent, a crosslinking aid, a metal deactivator, a molecular weight adjusting agent, an antibacterial agent, an antifungal agent, a fluorescent whitening agent, and a light diffusing agent such as an organic diffusing agent or an inorganic diffusing agent.

The antioxidant is not particularly limited as long as it does not inhibit the effects of the present invention, and examples thereof include a phenol-based antioxidant and a phosphite-based antioxidant. By adding the antioxidant, the rate of change of enthalpy before and after the heat treatment can be reduced. Specifically, the rate of change $\Delta H$ of enthalpy at a peak derived from polyurethane after being treated at 100°C for 200 hours is preferably 10% or less.

The content of the polyurethane for a heat storage material in the polyurethane composition for a heat storage material is preferably 80% or more and 99.9% or less. By setting the content of the polyurethane for a heat storage material within the above range, a high enthalpy of fusion can be obtained.

The filler is not particularly limited as long as it does not impair the effects of the present invention, and examples thereof include silicon carbide, aluminum nitride, alumina, boron nitride, and silicon nitride. By adding the filler, the thermal conductivity can be improved. Specifically, the content is preferably 0.1 to 60% by mass, more preferably 0.1 to 50% by mass, and further preferably 0.1 to 40% by mass with respect to 100% by mass of the polyurethane composition for a heat storage material.

In addition, the polyurethane for a heat storage material can be blended with other resins as long as the effects are not impaired. Specific examples of the other resins include polyethylene, polypropylene, polyester, polyester carbonate, aromatic polycarbonate, polyamide, polyimide, ABS, PMMA, and PET. For example, other resins can be blended from the viewpoint that the shape retainability can be improved.

[5. Method for Producing Polyurethane]

A method for producing a polyurethane will be described below using, as examples of the polyurethane raw material, a crystalline polyol, preferably a polyalkylene ether glycol, and an isocyanate compound having an average number of functional groups of 2.1 or more, preferably an aromatic polyisocyanate compound having an average number of functional groups of 2.1 or more.

For example, the polyurethane of the present invention can be obtained by mixing an isocyanate compound having an average number of functional groups of 2.1 or more, a crystalline polyol, and a catalyst.

The charged composition of the crystalline polyol and the isocyanate having an average number of functional groups of 2.1 or more may be, for example, a stoichiometric ratio such that the polyurethane satisfies a predetermined isocyanate group equivalent/polyol hydroxy group ratio. In other respects, the polyurethane can be produced by a usual polyurethane-forming reaction.

(Chain Terminator)

In the production of the polyurethane, a chain terminator having one active hydrogen group can be used, if necessary, for the purpose of controlling the molecular weight of the resulting polyurethane.

Examples of the chain terminator include aliphatic monools having one hydroxy group, such as methanol, ethanol, propanol, butanol, and hexanol, and aliphatic monoamines having one amino group, such as diethylamine, dibutylamine, n-butylamine, monoethanolamine, diethanolamine, and morpholine.

These may be used alone or in combination of two or more kinds thereof.

In addition, the upper limit amount of the chain terminator to be used is preferably 1,000 ppm or less with respect to 100 parts by weight of the total amount of the polyurethane resin (structural units (A1) and (B1)).

(Polyol Other than Polyalkylene Ether Glycol)

In the polyurethane-forming reaction for producing the polyurethane, another polyol may be used in combination with the polyalkylene ether glycol as the crystalline polyol (B), if necessary. Here, the polyol other than the polyalkylene ether glycol is not particularly limited as long as it is used in the production of a general polyurethane, and examples thereof include a polyester polyol, a polycaprolactone polyol, and a polycarbonate polyol. Here, the weight ratio of the polyalkylene ether glycol with respect to the total weight of the polyalkylene ether glycol and the other polyol is preferably 30% or more, and more preferably 50% or more. When the weight ratio of the polyalkylene ether glycol is the above lower limit value or more, the heat storage properties of the polyurethane are improved.

(Equivalent Ratio)

The amount of the aromatic polyisocyanate compound to be used is not particularly limited, but is preferably 0.4 equivalents or more and 1.2 equivalents or less when the total ($N1 + N2 + N3$) of the total number $N1$ of the hydroxy groups of the polyalkylene ether glycol and the hydroxy groups of the other polyols, the number $N2$ of the hydroxy groups of the chain extender, and the number $N3$ of the amino groups is 1 equivalent. The lower limit of the amount to be used is preferably 0.65 equivalents, more preferably 0.70 equivalents, and further preferably 0.80 equivalents. When the total is taken as 1 equivalent, the upper limit of the amount to be used is preferably 1.10 equivalents, more preferably 1.07 equivalents, further preferably 1.05 equivalents, and further more preferably 1.00 equivalent.

By adjusting the amount of the aromatic polyisocyanate compound to be used to be equal to or less than the upper limit, it is possible to suppress the occurrence of a side reaction of an unreacted isocyanate group and to prevent a change in hardness over time. On the other hand, when the amount to be used is equal to or more than the lower limit, the molecular weight of the polyurethane becomes sufficiently high, the polyurethane is hardly melted even when heated, the gel fraction of 70% or more can be maintained, and the shape retainability is improved.

The amount of the chain extender to be used is not particularly limited, but when the number obtained by subtracting the total number of hydroxy groups of the polyalkylene ether glycol and hydroxy groups of other polyols from the number of isocyanate groups of the aromatic polyisocyanate compound is 1 equivalent, the lower limit of the amount of the chain extender to be used is preferably 0.7 equivalents, more preferably 0.8 equivalents, further preferably 0.9 equivalents, and further more preferably 0.95 equivalents. The upper limit of the amount to be used is preferably 3.0 equivalents, more preferably 2.0 equivalents, further preferably 1.5 equivalents, and further more preferably 1.1 equivalents. When the amount of the chain extender to be used is equal to or less than the upper limit, it is possible to prevent the polyurethane from being difficult to be dissolved in a solvent and difficult to be processed. When the amount of the chain extender to be used is equal to or more than the lower limit, it is possible to prevent the polyurethane from being too soft. As a result, the strength, hardness, elastic recovery performance, and elastic retention performance of the polyurethane are improved, and the heat resistance of the polyurethane is improved.

The polyurethane is preferably a polyurethane elastomer. In this case, in the heat storage molded body described later, it is possible to obtain a heat storage molded body having excellent stretchability. In addition, such a heat storage molded body also has good shape retainability against heating and cooling.

In addition, the polyurethane elastomer is preferably a thermosetting type. That is, the polyurethane is preferably a thermosetting polyurethane elastomer. In this case, filling molding (potting) becomes possible by using a two-pack curing type, and molding becomes possible even in a product having a complicated shape or a large capacity.

[6. Method for Producing Polyurethane Composition for Heat Storage Material]

The polyurethane composition for a heat storage material is produced, for example, by a method of mechanically melt-kneading the above-described components constituting the composition. As the melt-kneader, for example, a single-screw extruder, a twin-screw extruder, or the like can be used. From the viewpoint of productivity and quality uniformity, a method in which each component is continuously introduced into an extruder and a polyurethane composition is continuously obtained is preferable.

[7. Heat Storage Molded Body]

The heat storage molded body of the present invention is a molded body of the polyurethane or the polyurethane composition for a heat storage material. As described above, the heat storage molded body preferably has a density of 1.0 to 10 g/cm$^3$, and more preferably 2 to 8 g/cm$^3$ from the viewpoint of increasing the thermal conductivity.

In addition, from the viewpoint of improving the heat storage performance, the thermal conductivity of the heat storage molded body is preferably 0.2 to 5.0 W/(m·K), more preferably 1.0 to 5.0 W/(m·K), and further preferably 1.0 to 3.0 W/(m·K).

The heat storage molded body is composed of a heat storage material and is obtained by, for example, molding the heat storage material. Specifically, the heat storage molded body is produced by molding the heat storage material into various shapes such as a sheet shape, a plate shape, a granular shape, a pellet shape, and a tubular shape. In the molding, a general molding method is used, and specifically, extrusion molding, injection molding (specifically, an insert molding method, a two-color molding method, a sandwich molding method, a gas injection molding method, or the like), or the like is used. More specifically, a mixture of the components in a molten state at the time of production of the heat storage material can be cast into a mold as it is (for example, at the temperature of the molten state) or after being slightly cooled and molded. In addition, since the heat storage material is solidified at a temperature lower than the flow start temperature thereof, for example, the heat storage material may be molded into a block shape and then cut into a sheet shape or a plate shape. Furthermore, the heat storage material may be attached to, applied to, or impregnated into a film, cloth, fiber, particle board, or the like to form a sheet shape or a plate shape. Alternatively, the heat storage material may be packed in a bag made of polyethylene or the like and formed into a sheet shape, a plate shape, or a rod shape in the cooling process. In addition, extrusion molding may be performed into a sheet shape or a plate shape using an extruder. A product molded into a rod shape or a pipe shape by an extruder may be cut into a granular shape or a pellet shape. In each molding method, the apparatus and the processing conditions are not particularly limited.

The shape of the heat storage molded body is not particularly limited, and examples thereof include a sheet shape, a film shape, a plate shape, a particulate shape, a massive shape, a fiber shape, a rod shape, a porous body shape, and a foam shape, and a sheet shape, a film shape, and a plate shape are preferable. Furthermore, a surface treatment such as a corona discharge treatment, a flame treatment, a plasma treatment, or an ozone treatment, which is usually industrially used, can also be performed.

The heat storage molded body preferably has an exothermic peak temperature (crystallization temperature) of 20°C or higher and 80°C or lower as measured by differential scanning calorimetry. The lower limit of the exothermic peak temperature is more preferably 25°C and further preferably 30°C. On the other hand, the upper limit is more preferably 75°C, further preferably 70°C, particularly preferably 65°C, and especially preferably 60°C. When the exothermic peak temperature is within the above range, heat storage and cold storage can be efficiently performed.

From the viewpoint of efficiently absorbing heat from the battery, the exothermic peak temperature is preferably 0 to 80°C, and more preferably 30 to 60°C.

The measurement of the exothermic peak temperature is performed using a differential scanning calorimeter. Specifically, it is carried out as follows. First, by heating in a nitrogen atmosphere, an aluminum pan in which about 5 mg of a sample is sealed is heated from room temperature to a predetermined temperature at a temperature raising rate of 1°C/min and held for 1 minute. Then, the sample is cooled to -10°C at a temperature lowering rate of 1°C/min. The exothermic peak temperature can be determined from the DSC curve obtained by this temperature lowering. Specifically, the maximum point of the exothermic curve in a range of 20°C to 80°C is determined, and the temperature at this maximum point is taken as the exothermic peak temperature.

The heat storage molded body preferably has an endothermic peak temperature of 30°C or higher and 90°C or lower as measured by differential scanning calorimetry (DSC). The lower limit of the endothermic peak temperature is more preferably 35°C, further preferably 40°C, and particularly preferably 50°C. On the other hand, the upper limit thereof is more preferably 85°C, further preferably 80°C, particularly preferably 75°C, and especially preferably 70°C. When the endothermic peak temperature is within the above range, heat storage and cold storage can be efficiently performed.

From the viewpoint of efficiently absorbing heat from the battery, the endothermic peak temperature is preferably 30 to 90°C, and more preferably 50 to 80°C.

The measurement of the endothermic peak temperature is performed using a differential scanning calorimeter (DSC). Specifically, it is carried out as follows. First, by heating in a nitrogen atmosphere, an aluminum pan in which about 5 mg of a sample is sealed is heated from room temperature to a predetermined temperature at a temperature raising rate of 1°C/min and held for 1 minute. Then, the sample is cooled to -10°C at a temperature lowering rate of 1°C/min and held for 1 minute. Thereafter, the temperature is raised again to a predetermined temperature at a temperature raising rate of 1°C/min. The endothermic peak temperature can be determined from the DSC data (DSC curve) obtained in the second temperature raising. Specifically, the minimum point of the endothermic curve in a range of 30°C to 90°C is determined, and the temperature at this minimum point is taken as the endothermic peak temperature.

The heat storage molded body preferably has an enthalpy of fusion of 70 J/g or more, more preferably 72 J/g or more, and further preferably 74 J/g or more, as measured at 30°C or higher and 90°C or lower by differential scanning calorimetry. The upper limit of the enthalpy of fusion is not particularly limited, but is preferably 150 J/g or less.

The enthalpy of fusion refers to heat of fusion in a portion within a temperature range of 30°C or higher and 90°C or lower in a melting curve measured by differential scanning calorimetry, and is obtained by, for example, the following method.

The enthalpy of fusion is measured using a differential scanning calorimeter in the same manner as the endothermic peak temperature. The specific measurement is also performed in the same manner as in the endothermic peak temperature. Then, the DSC data (DSC curve) obtained in the second temperature raising is used as a measurement curve. The measurement point at 30°C and the measurement point at 90°C in the measurement curve are connected by a straight line. The total amount of the portion on the endothermic side from the straight line (the total amount is represented by the area of the region surrounded by the straight line and the DSC curve) is taken as the enthalpy of fusion. When there is no peak in the measurement curve between 30°C and 90°C, the enthalpy of fusion is regarded as 0.

(Extrusion Molding)

In the case of obtaining a molded body by extrusion molding, the molded body is produced, for example, as follows. First, each raw material is charged into an extruder that has reached a temperature at which the raw material constituting the heat storage material is sufficiently melted, and kneaded while being melted. The melt-kneaded product is discharged from a spinneret having various shapes, and then the discharged product is cooled by air cooling or water cooling to obtain a desired molded body. As the extruder, either a single-screw extruder or a twin-screw extruder may be used, but from the viewpoint of dispersibility, it is preferable to use a twin-screw extruder.

(Injection Molding)

In the case of obtaining a molded body by injection molding, each raw material is charged into an extruder that has reached a temperature at which the raw material constituting the heat storage material is sufficiently melted, and is injected into a mold having various shapes to obtain a desired molded body. The molding temperature in this case is also preferably in the same range as in the case of extrusion molding.

<Use of Heat Storage Molded Body>

The use of the heat storage molded body is not particularly limited, and the heat storage molded body has excellent heat storage performance, heat resistance, moldability, and shape retainability, and therefore is suitably used as, for example, a product or a member thereof that is directly or indirectly required to have heat retaining/cooling performance.

Examples of the product or the member thereof that is directly or indirectly required to have heat retaining/cooling performance include building materials, furniture, interior goods, bedding, bathroom materials, vehicles, air conditioning equipment, electrical appliances, heat retaining containers, food packaging films, clothing, daily necessities, agricultural materials, fermentation systems, thermoelectric conversion systems, heat transport media, electronic devices, heat pumps, and lithium battery modules.

Among these, the heat storage molded body can be suitably used for a building material, specifically, a heat storage construction material to be installed around a pipe for sending a heat source for underfloor heating or central heating, or for heat retention of a heat source in a planar heating device such as an electric blanket.

In addition, among these, it is particularly suitable for applications in battery materials for vehicles, lithium battery modules, and the like, and is suitable for cooling an assembled battery described in detail below.

In the present invention, the heat source is not limited as long as it generates heat, and examples thereof include a heat medium such as water, oil, or gas, an electric heating wire, and the like.

In addition, since the heat storage molded body can maintain a solid state at or above the endothermic peak, it can be molded into the shape of a building material, and since it does not return to a liquid state once solidified, it can be used in an application for being contained in a porous material or can be integrally molded by pouring it around a heat source and curing it.

In addition, since the heat storage molded body can be molded in a solventless manner, it is possible to integrally mold the heat storage molded body by directly pouring the heat storage molded body into a device or a module and curing the heat storage molded body. Further, the heat storage material alleviates damage to the device or the module due to a temperature change, which can contribute to the extension of the life of the device or the module.

[7-1. Heat Storage Construction Material]

The heat storage construction material refers to, for example, floor heating, central heating, a heat pump, an electric stove, an oil stove, and the like, and the heat storage construction material of the present invention can be suitably used for these applications.

In addition, from the viewpoint of keeping a building warm through the heat storage construction material, it is preferable to include the polyurethane of the present invention. The heat storage molded body preferably contains a thermosetting polyurethane and the heat storage molded body preferably has an exothermic peak temperature of 20 to 80°C. Further, the heat storage molded body preferably has an endothermic peak temperature of 30 to 90°C, and preferably has an enthalpy of fusion of 70 J/g or more, and preferably includes a temperature region in which the heat storage molded body is solid at a temperature equal to or higher than the endothermic peak temperature.

The heat storage material is preferably solid at 50 to 200°C. The heat storage material is more preferably solid at 50 to 180°C, and further preferably solid at 50 to 160°C. In a case where the heat storage material is solid in the above range, liquefaction of the heat storage material does not occur.

In addition, an embodiment in the present invention is a heat storage construction material including a heat storage material installed around a heat source. The term "around" in the present invention refers to a range affected by a heat source.

In addition, another embodiment of the present invention is a heat storage construction material provided with a heat medium, and a heat medium circulation pipe connected to the heat medium, or a heat storage material installed around an electric heating wire.

Furthermore, another embodiment of the present invention includes an aspect in which the heat source is located under a floor or on a wall surface of a building.

From the viewpoint of efficiently keeping a building warm, the heat storage material installed around the heat source is preferably installed in contact with the heat source.

One embodiment of the heat storage construction material provided with the heat storage material installed around the heat source in the present invention is underfloor heating.

Specifically, the heat storage construction material is a heat storage construction material provided with a heat storage material around a heat source, a heat medium circulation pipe, or an electric heating wire in a building provided with the heat source and the heat medium circulation pipe or the electric heating wire under a floor.

One embodiment of the heat storage construction material provided with the heat storage material installed around the heat source in the present invention is central heating.

Specifically, the heat storage construction material is a heat storage construction material having a facility for delivering heat to the entire building through a heat medium circulation pipe or an electric heating wire in a building having a plurality of rooms, and having a heat storage material around the heat medium, the heat medium circulation pipe, or the electric heating wire.

[7-2. Planar Heating Device]

The planar heating device is, for example, an electric blanket, an electric mat, a kotatsu, and an electric heating garment.

From the viewpoint of keeping the planar heating device warm, the heat storage molded body preferably contains a thermosetting polyurethane and the heat storage molded body preferably has an exothermic peak temperature of 20 to 80°C and an endothermic peak temperature of 30 to 90°C, and further, the heat storage molded body preferably has an enthalpy of fusion of 70 J/g or more, and preferably includes a temperature region in which the heat storage molded body is solid at a temperature equal to or higher than the endothermic peak temperature.

In addition, it is preferable that the planar heating device is provided with a heat storage molded body containing the polyurethane around the electric heating wire.

[7-3. On-Vehicle Seat]

The on-vehicle seat is mounted on a vehicle, and an occupant of the vehicle is seated thereon.

From the viewpoint of keeping the on-vehicle seat warm, the heat storage molded body preferably contains a thermosetting polyurethane and the heat storage molded body preferably has an exothermic peak temperature of 20 to 80°C and an endothermic peak temperature of 30 to 90°C, and further, the heat storage molded body preferably has an enthalpy of fusion of 70 J/g or more, and preferably includes a temperature region in which the heat storage molded body is solid at a temperature equal to or higher than the endothermic peak temperature.

In addition, it is preferable that the on-vehicle seat is provided with a heat storage molded body containing the polyurethane around the electric heating wire.

[7-4. Assembled Battery]

The assembled battery is applied to a battery pack mounted on, for example, an electric vehicle (EV), a hybrid electric vehicle (HEV), a plug-in hybrid electric vehicle (PHEV), an electric heavy machine, an electric motorcycle, an electrically assisted bicycle, a ship, an aircraft, a train, an uninterruptible power supply (UPS), a household power storage system, a storage battery system for stabilizing a power system using renewable energy such as wind power, solar power, tidal power, or geothermal power, or the like. However, the assembled battery can also be used as a power source for supplying electric power to devices other than the above-described EV and the like.

An embodiment of the present disclosure is an assembled battery including a plurality of unit cells and a heat storage molded body in contact with the unit cells.

From the viewpoint of cooling the unit cell, it is preferable that the heat storage molded body contains a thermosetting polyurethane, and the endothermic peak temperature of the heat storage molded body is 30 to 80°C.

From the viewpoint of efficiently cooling the unit cell, it is preferable that the heat storage molded body has a single endothermic peak temperature.

From the viewpoint of efficiently cooling the unit cell, the distance between any two unit cells is preferably 1.0 mm or more, more preferably 1.5 mm or more, more preferably 2.0 mm or more, and more preferably 2.5 mm or more. The distance is more preferably 1.0 to 10 mm, and further preferably 2.0 to 5.0 mm.

<Unit Cell>

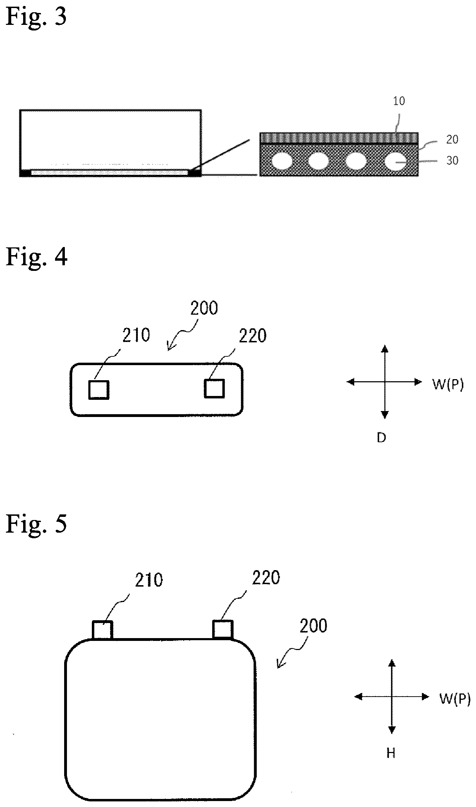

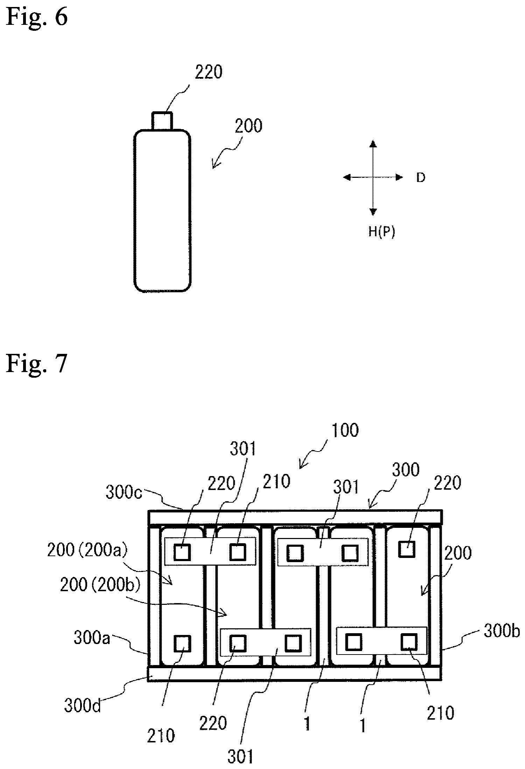

Fig. 4 is a plan view showing an example of a unit cell constituting an assembled battery, Fig. 5 is a front view of the unit cell shown in Fig. 4, and Fig. 6 is a right side view of the unit cell. The unit cell 200 is formed in a rectangular parallelepiped shape having a height direction (H), a width direction (W), and a thickness direction (D), and a terminal 210 and a terminal 220 are provided on an upper surface thereof. The unit cell 200 is, for example, a lithium ion secondary battery including a positive electrode and a negative electrode capable of occluding and releasing lithium ions, and an electrolyte. In addition to the lithium ion secondary battery, secondary batteries such as a lithium ion all-solid-state battery, a nickel-hydrogen battery, a nickel-cadmium battery, and a lead acid battery can be applied.

Examples of the unit cell include a rectangular battery, a pouch-shaped battery, and a cylindrical battery. In order to obtain a cooling effect, the unit cell and the heat storage molded body may be at least partially in contact with each other, and may be in contact with the unit cell via a packaging material covering the heat storage molded body. Among the unit cells, a cylindrical battery is preferable from the viewpoint of easy handling.

The shape of the heat storage molded body can be appropriately designed in accordance with the unit cell.

<Assembled Battery>

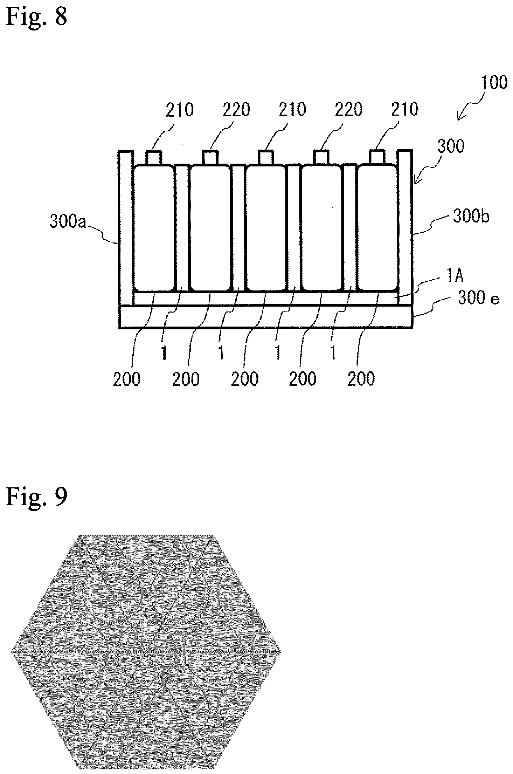

Fig. 7 is a top view of an assembled battery 100 formed by using a plurality of unit cells 200, and Fig. 8 is a side view schematically showing a state in which a side plate 300d is removed from the assembled battery 100 shown in Fig. 7. In Fig. 7 and Fig. 8, the assembled battery 100 includes a housing 300 and a plurality of unit cells 200 housed in the housing 300. The housing 300 has a bottom plate 300e and side plates 300a, 300b, 300c, and 300d erected along the outer periphery of the bottom plate 300e. In Fig. 7 and Fig. 8, five unit cells 200 are illustrated as an example, but the number of unit cells can be appropriately selected. The positive electrode terminal (for example, terminal 210) and the negative electrode terminal (for example, terminal 220) of the unit cells 200 adjacent to each other (facing each other) via a heat storage molded body 1 are electrically connected in series by a bus bar 301, whereby the assembled battery 100 outputs a predetermined electric power.

<Battery Pack>

An embodiment of the present invention is a battery pack in which the assembled battery is housed in a housing.
From the viewpoint of efficiently cooling the unit cell, it is preferable that the heat storage molded body has a continuous structure in the housing.
As shown in Fig. 8, in one aspect of the assembled battery 100, a heat transfer plate 1A is disposed between the upper surface of the bottom plate 300e of the housing 300 and each unit cell (rectangular battery) 200.
From the viewpoint of efficiently cooling the unit cell, it is preferable that the battery pack includes a heat transfer plate, the heat transfer plate is in contact with the unit cell and the heat storage molded body, and it is more preferable that the heat transfer plate is disposed at the bottom of the heat storage material.

<Method for Producing Battery Pack>

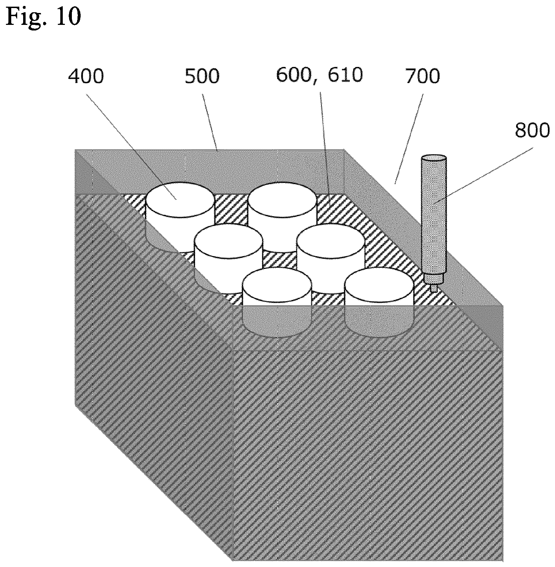

An embodiment of the present invention is a method for producing the battery pack (hereinafter, also referred to as a potting process). Fig. 10 illustrates an example of a battery pack.
The battery pack is produced by filling a composition 600, which is a potting material, through a nozzle 800 into an assembled battery 700 in which a plurality of unit cells (cylindrical batteries) 400 are housed in a housing 500.
The potting material is the composition 600 before being heated (before cure reaction), and becomes a polyurethane 610 after being heated (after cure reaction). The polyurethane may be a polyurethane composition for a heat storage material further containing an antioxidant and a filler, or may be a heat storage molded body filled in a housing having a specific shape.
In the method for producing the battery pack, it is preferable that a composition containing an aromatic compound (A) having an isocyanate group with an average number of functional groups of 2.1 or more, a crystalline polyol (B), and a catalyst (C) is filled in a housing provided with a plurality of unit cells. From the viewpoint of filling efficiently, it is more preferable to include at least one or more steps of (1) heating the composition to a temperature equal to or higher than the melting point of the crystalline polyol, (2) heating the housing, and (3) heating the unit cell.
In the steps (1) to (3), heating is preferably performed at a temperature equal to or higher than the melting point of the crystalline polyol, more preferably performed at 20 to 120°C, further preferably performed at 40 to 120°C, and especially preferably performed at 60 to 120°C. As shown in Fig. 10, the filling is performed using the nozzle 800. From the viewpoint of filling efficiently, the composition is preferably filled from at least two positions. At least two nozzles for filling the composition may be provided, one nozzle may be moved to fill the composition from a plurality of positions, or these may be combined.

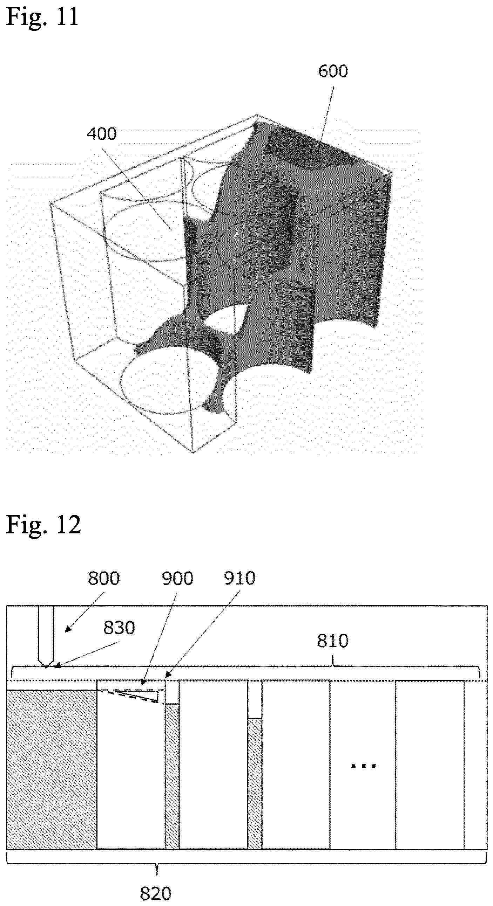

Fig. 11 is a snapshot of the potting process.
The filling time is controlled by the variables in the potting process: spacing between the cells, viscosity, and flow rate of the potting material. The small spacing between the cells, the high viscosity of the potting material, and the high flow rate reduce the production efficiency.
In Experimental Example A, the relationship between the variables and F, and the relationship between the gradients formed by the potting material were investigated, and an efficient potting process was investigated.

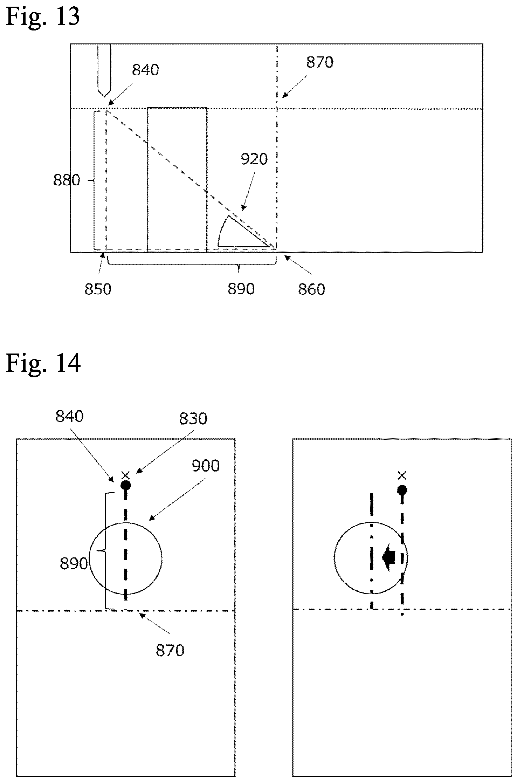

Fig. 12 and Fig. 13 are cross-sectional views of the battery pack in the long-side direction. In Fig. 13, reference numeral 870 denotes a bisecting plane in the short side direction of the battery pack. The cross-sectional view is a plane including three points of a foot 840 of a perpendicular line from 830 to 810, a foot 850 of a perpendicular line from 830 to 820, and a foot 860 of a perpendicular line from 850 to 870. In Fig. 12, a cylindrical battery 900 closest to the nozzle has intersections with the potting material liquid surface at both ends thereof. An angle 910 of the gradient formed by the potting material is an angle formed by a line segment connected at the intersection with respect to the bottom surface of the assembled battery.
A threshold angle 920 of the gradient is $\theta 2 = \arctan(X/Y)$ calculated from the shape of the battery pack. Here, X is a distance of a line segment represented by 880, that is, a distance of line segment 880 between foot 840 of a perpendicular line from nozzle tip point 830 to battery pack ceiling surface 810 and foot 850 of a perpendicular line from nozzle tip point 830 to battery pack bottom surface 820. The X corresponds to the height of the cylindrical battery. Y is a distance of a line segment represented by 890, that is, a distance of line segment between foot 850 of a perpendicular line from nozzle tip point 830 to battery pack bottom surface 820 and foot 860 of a perpendicular line from the foot 850 of a perpendicular line to bisecting plane 870 in the short side direction of the battery pack. When the nozzle tip point 830 is located on the bisecting plane 870, Y is set to 1/2 in the long side direction of the housing of the battery pack in the calculation of the threshold angle θ2. In addition, in the calculation of F represented by Equation (II), the filling volume flow rate is set to 1/2 of the filling volume flow rate. In a case where the angle 910 of the gradient is higher than the threshold angle 920, it means that the potting material overflows from the upper surface of the assembled battery before reaching the point 860 when the potting material is filled at a constant flow rate.

Fig. 14 is a plan view of the battery pack when the ceiling surface 810 of the assembled battery in Fig. 12 is viewed from a direction perpendicular to the bottom surface of the assembled battery. In Fig. 14, a method of determining the cross section in Fig. 13 for calculating the angle of the gradient will be described. In order to calculate the angle 910 of the gradient, it is necessary to consider a cross section passing through the center of the cylindrical battery 900 as illustrated in the left diagram.

For example, when the cylindrical battery is positioned asymmetrically in the housing, the angle 910 of the gradient may be underestimated when the cross-section is checked by the conventional method described above. Therefore, in this case, the perpendicular line 890 is moved in parallel in the short side direction so as to pass through the center of the cylindrical battery as indicated by the long two dot chain line, and the cross-section is corrected.

From the viewpoint of enhancing the cooling efficiency, the composition is preferably filled to 50% or more, more preferably filled to 60% or more, more preferably filled to 70% or more, and more preferably filled to 80% or more, and is preferably filled to 100% or less, preferably filled to 97% or less, more preferably filled to 95% or less, more preferably filled to 90% or less, and more preferably filled to 85% or less, with respect to the height of the battery of 100%.

From the viewpoint of filling efficiently, it is preferable to adjust the F of Equation (I) defined by the viscosity (Pa·s) of the composition at the time of filling, the filling volume flow rate (m³/s), and the minimum value (m) of the distance between batteries disposed in a housing to 1.5N or less.

$$F = \text{(viscosity of composition)}^{0.53} \times \text{(filling volume flow rate)}^{0.62}/\text{(minimum value of distance between a plurality of batteries disposed in housing)}^{1.3} \quad \text{(I)}.$$

Here, F means a resistance force against the flow of the potting material between the cylindrical batteries at the time of filling the potting material. The larger the value of F is, that is, the larger the resistance force against the flow of the potting material is, the more difficult it is for the potting material to flow in the battery pack, and the larger the angle 910 of the gradient formed by the potting material is.

From the viewpoint of filling efficiently, it is preferable to adjust the F so that the angle θ1 of the gradient formed by the potting material at the time of filling, which is calculated by the following Equation (II) and the following Equation (III), is 40° or less. The angle θ1 is preferably 35° or less, more preferably 30° or less, further preferably 25° or less, further more preferably 20° or less, particularly preferably 15° or less, and most preferably 12° or less.

(When $0° \leq 0 < 3°$)

$F = 1.31 \times 10^{-1} \times$ (the angle of the gradient formed by the potting material with respect to the bottom surface of the battery pack at the time of filling: θ1) - $1.44 \times 10^{-2}$ Equation (II)

**(When $\theta \geq 3°$)**

$F = 3.93 \times 10^{-2} \times$ (the angle of the gradient formed by the potting material with respect to the bottom surface of the battery pack at the time of filling: θ1) - $5.02 \times 10^{-2}$ Equation (III)

In the case of adjusting the F, a polyol having a viscosity at 25°C of 1.0 Pa·s or less is preferably used, a polyol having a viscosity at 25°C of 0.8 Pa·s or less is more preferably used, a polyol having a viscosity at 25°C of 0.6 Pa·s is further preferably used, a polyol having a viscosity at 25°C of 0.4 Pa·s is further more preferably used, and a polyol having a viscosity at 25°C of 0.2 Pa·s is particularly preferably used.

In the case of adjusting the F, the filling volume flow rate of the composition is preferably decreased to $2.0 \times 10^{-7}$ m³/s, more preferably decreased to $1.0 \times 10^{-7}$ m³/s, further preferably decreased to $0.5 \times 10^{-7}$ m³/s, and particularly preferably decreased to $0.2 \times 10^{-7}$ m³/s.

In the case of adjusting the F, the distance between unit cells is preferably set to 1.0 to 4.0 mm, more preferably set to 1.0 to 3.0 mm, and further preferably set to 1.0 to 2.0 mm.

From the viewpoint of efficiently cooling the unit cell, it is preferable that the method of using the assembled battery includes raising the temperature to an endothermic temperature, and cooling at 100°C/min or less, more preferably 75°C/min or less, further preferably 50°C/min or less, further more preferably 25°C/min or less, particularly preferably 10°C/min or less, especially preferably 5°C/min or less, and particularly preferably 1°C/min or less.

It is preferable to include maintaining the temperature at the endothermic temperature or higher for 1 minute or more.

<Method of Using Battery Pack>

An embodiment of the present invention is a method of using the battery pack.

Preferably, the method includes raising to a temperature equal to or higher than the endothermic peak temperature and cooling to a temperature equal to or lower than the exothermic peak temperature.

The method preferably includes charging a battery in contact with the heat storage molded body at C/3 or more, and absorbing heat generated from the battery by phase transition of the polyurethane.

In the method, it is preferable that the heat storage molded body is further heated at a temperature equal to or higher than the endothermic peak temperature of the heat storage molded body for a certain period of time. The lower limit of the certain period of time is preferably 1 minute or more, more preferably 5 minutes or more, more preferably 10 minutes or more, more preferably 30 minutes or more, more preferably 1 hour, and more preferably 2 hours or more. The upper limit of the certain period of time is preferably 1 hour.

Examples

Hereinafter, the present invention will be described in more detail with reference to Examples and Comparative Examples, but the present invention is not limited to these Examples as long as the gist of the present invention is not exceeded. In Examples, an example in which a polyurethane elastomer for a heat storage material is used as the polyurethane for a heat storage material will be described.

[Evaluation Methods]

Methods for evaluating polyurethane elastomers for heat storage materials, heat storage materials containing the same, and heat storage molded bodies obtained in the following Examples and Comparative Examples are as follows.

[Evaluation of Heat Storage Molded Body]

<Endothermic peak temperature>

By heating in a nitrogen atmosphere, an aluminum pan in which about 5 mg of a sample was sealed was heated from 25°C to 80°C at a temperature raising rate of 1°C/min and held for 1 minute. Then, the sample was cooled to -10°C at a temperature lowering rate of 1°C/min and held for 1 minute. Thereafter, the temperature was raised again to 80°C at a temperature raising rate of 1 °C/min. The endothermic peak temperature was determined from the DSC data (DSC curve) obtained in the second temperature raising. Specifically, the minimum point of the endothermic curve in a range of 30°C to 60°C was determined, and the temperature at this minimum point was taken as the endothermic peak temperature.

<Enthalpy of fusion>

DSC data (DSC curve) was obtained in the same manner as in the measurement of the endothermic peak temperature. This DSC data was used as a measurement curve. A measurement point at 30°C and a measurement point at 60°C on the measurement curve were connected by a straight line. The total amount of the portion on the endothermic side of this straight line was defined as the enthalpy of fusion. The total amount is represented by the area of the region surrounded by the straight line and the DSC curve. In addition, in a case where there was no peak in the measurement curve between 30°C and 60°C, the enthalpy of fusion was regarded as 0.

<Exothermic peak temperature>

By heating in a nitrogen atmosphere, an aluminum pan in which about 5 mg of a sample was sealed was heated from 25°C to 80°C at a temperature raising rate of 1°C/min and held for 1 minute. Then, the sample was cooled to -10°C at a temperature lowering rate of 1°C/min and held for 1 minute. The exothermic peak temperature was determined from the DSC curve obtained by this temperature lowering. Specifically, the maximum point of the exothermic curve in a range of 30°C to 60°C was determined, and the temperature at this maximum point was taken as the exothermic peak temperature.

<Phase state at 80°C>

In a case where the heat storage material is kept at a temperature higher than the endothermic peak temperature and is liquefied, the heat storage material may flow out to the outside and the heat storage function may be lost. Therefore, the phase state after fusion was evaluated. A sheet was cut into a 30 × 30 mm to prepare a test sample, and the test sample was allowed to stand on a hotplate at 80°C and covered with a glass petri dish. After holding for 15 minutes, the presence or absence of fluidity was confirmed when the test sample was touched with a spatula, and the phase state was determined.

A solid was evaluated as S, and a liquid was evaluated as L.

Example 1

<Production of Polyurethane Elastomer for Heat Storage Material>

In a disposable cup, 170.0 g of a commercially available polyalkylene ether glycol ("PEG4000S" manufactured by Sanyo Chemical Industries, Ltd., hydroxyl value: 33 mgKOH/g (number-average molecular weight: 3,400)) heated to 65°C was weighed.

Separately, triethylenediamine manufactured by Tokyo Chemical Industry Co., Ltd. and SANNIX PP-2000 which is polypropylene glycol manufactured by Sanyo Chemical Industries, Ltd. were weighed as a urethane catalyst at a ratio of 1 : 9, 0.26 g of a catalyst solution dissolved at 80°C and returned to ordinary temperature was charged, and the mixture was stirred and sufficiently mixed using a three one motor.

Thereto, 8.2 g of Millionate MR-200 (NCO content: 30.8%), which is polymethylene polyphenyl polyisocyanate (hereinafter referred to as "p-MDI") manufactured by Tosoh Corporation as an aromatic compound having a polyfunctional (average number of functional groups: 2.8) isocyanate group, was added and reacted while stirring and mixing at 300 rpm for 5 minutes.

The NCO Index, which is the ratio of the isocyanate equivalent to the hydroxy group equivalent, was set to 0.6, and the isocyanate weight was calculated by Equation 1.

[Math. 1]

$$\text{Isocyanate weight (g)} = \frac{\text{Polyol hydroxyl value (mgKOH/g)}}{561} \times \frac{42 \times 100}{\text{Isocyanate content(\%)}} \times \frac{\text{Polyol weight (g)}}{100} \times \text{NCO index [-]} \quad \text{Equation 1}$$

Thereafter, a silicone-based release film was laid on a glass plate, and a silicone mold (dimensions: 15 cm × 15 cm, thickness 2 mm) was further placed thereon. The obtained mixed solution was poured into the mold, the mold was covered with a release film and a glass plate in this order, and then a weight was placed on the glass plate on the upper portion of the mold, followed by further curing for 30 minutes. On the next day, the mixture was taken out from the silicone mold to obtain a polyurethane elastomer for a heat storage material (dimension: 15 cm × 15 cm, thickness: 2 mm). Then, the polyurethane elastomer aged at room temperature for 1 week was used for evaluation.

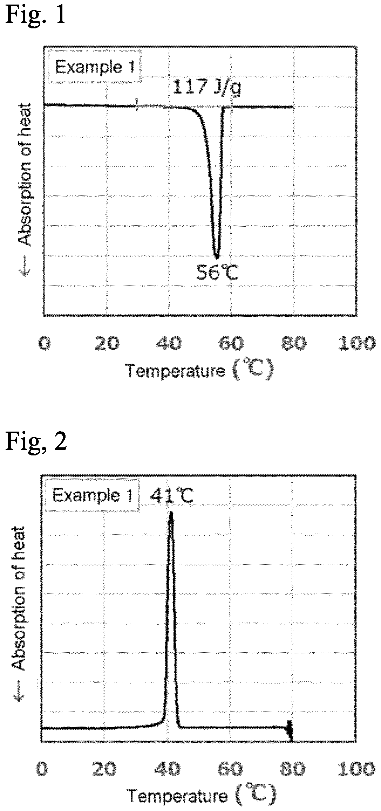

The DSC curve during temperature raising of the polyurethane elastomer produced in Example 1 is shown in Fig. 1. In addition, the DSC curve during temperature lowering is shown in Fig. 2. The endothermic peak temperature was 56°C, and the exothermic peak temperature was 41°C.

In addition, the above evaluation results are shown in Table 1.

[Examples 2 to 5]

A polyurethane elastomer for a heat storage material was obtained in the same manner as in Example 1 except that the amount was changed as shown in Table 1. The evaluation was performed in the same manner as in Example 1. The results are shown in Table 1.

[Comparative Example 1]

A polyurethane elastomer for a heat storage material was obtained in the same manner as in Example 1 except that Millionate MT, which is 4,4'-diphenylmethane diisocyanate (hereinafter referred to as "MDI") manufactured by Tosoh Corporation, was used as a bifunctional diisocyanate and melted at 70°C and used.

The evaluation results of the physical properties of the heat storage molded body are shown in Table 1.

[Examples 6 to 8]

Polyurethane elastomers for a heat storage material were obtained in the same manner as in Example 1, except that in Example 1, the polyol shown in Table 1 was used, the amount of the isocyanate blended was changed to the amount shown in Table 1, and no catalyst was used. The results of the evaluation performed in the same manner as in Example 1 are shown in Table 1.

The PEG ratio in Table 1 means the weight fraction of the structural unit (B) with respect to the total weight of the structural units (A) and (B).

[Table 1]

Table 1

| | | | Comparative Example 1 | Example 1 | Example 2 | Example 3 | Example 4 |
|---|---|---|---|---|---|---|---|
| Polyol | PEG1000 | (g) | | | | | |
| | PEG2000 | (g) | | | | | |
| | PEG4000S | (g) | 170.0 | 170.0 | 170.0 | 170.0 | 170.0 |
| | PEG10000 | (g) | | | | | |
| Isocyanate | Millionate MT (MDI) | (g) | 13.1 | - | - | - | - |
| | Millionate MR-200 (p-MDI) | (g) | - | 8.2 | 10.9 | 13.6 | 14.3 |
| Catalyst | Triethylenediamine | (g) | 0.03 | 0.03 | 0.03 | 0.03 | 0.03 |
| | SANNIX PP-2000 | (g) | 0.23 | 0.23 | 0.23 | 0.23 | 0.23 |
| NCO Index | | (-) | 1.05 | 0.60 | 0.80 | 1.00 | 1.05 |
| PEG ratio | | (%) | 93 | 95 | 94 | 93 | 92 |
| DSC | Endothermic peak temperature | (°C) | 52 | 56 | 54 | 52 | 51 |
| | Enthalpy of fusion | (J/g) | 109 | 117 | 90 | 76 | 77 |
| | Exothermic peak temperature | (°C) | 35 | 41 | 40 | 37 | 36 |
| Phase state at 80°C (S: solid, L: liquid) | | | L | S | S | S | S |

Table 1 (continued)

| | | | Example 5 | Example 6 | Example 7 | Example 8 |
|---|---|---|---|---|---|---|
| Polyol | PEG1000 | (g) | | 100 | | |
| | PEG2000 | (g) | | | 100 | |
| | PEG4000S | (g) | 170.0 | | | |
| | PEG10000 | (g) | | | | 100 |
| Isocyanate | Millionate MT (MDI) | (g) | - | - | - | - |
| | Millionate MR-200 (p-MDI) | (g) | 16.4 | 20 | 12.5 | 3.6 |
| Catalyst | Triethylenediamine | (g) | 0.03 | | | |
| | SANNIX PP-2000 | (g) | 0.23 | | | |
| NCO Index | | (-) | 1.20 | 0.73 | 0.92 | 1.47 |
| PEG ratio | | (%) | 91 | 83 | 89 | 97 |
| DSC | Endothermic peak temperature | (°C) | 51 | 34 | 44 | 57 |
| | Enthalpy of fusion | (J/g) | 82 | 62 | 73 | 94 |
| | Exothermic peak temperature | (°C) | 35 | 0 | 22 | 42 |
| Phase state at 80°C (S: solid, L: liquid) | | | S | S | S | S |

As can be seen from Table 1, it is clear that the polyurethanes for a heat storage material and the heat storage molded bodies thereof of Examples 1 to 8 having specific structural units are excellent in heat storage properties and shape retainability. On the other hand, in Comparative Example 1 not containing a specific structural unit, the phase state at 80°C was liquid, and the shape retainability was insufficient.

In addition, Examples 6 to 8 were polyurethanes for a heat storage material and heat storage molded bodies thereof in which the molecular weights of the polyols were different, but had excellent heat storage properties and shape retainability as in Examples 1 to 5.

[Examples 9 to 14]

A polyurethane elastomer for a heat storage material was obtained in the same manner as in Example 2, except that in Example 2, the antioxidant shown in Table 2 was added in the amount shown in Table 2. The results of the evaluation performed in the same manner as in Example 2 are shown in Table 2.

The antioxidants used here are as follows.

AO-30: ADK STAB AO-30 (phenol-based antioxidant, manufactured by ADEKA CORPORATION)
AO-40: ADK STAB AO-40 (phenol-based antioxidant, manufactured by ADEKA CORPORATION)

[Table 2]

Table 2

| | | | Example 2 | Example 9 | Example 10 | Example 11 |
|---|---|---|---|---|---|---|
| Polyol | PEG4000S | (g) | 170.0 | 170.0 | 170.0 | 170.0 |
| Isocyanate | Millionate MT (MDI) | (g) | - | - | - | - |
| | Millionate MR-200 (p-MDI) | (g) | 10.9 | 10.9 | 10.9 | 10.9 |
| Catalyst | Triethylenediamine | (g) | 0.03 | 0.03 | 0.03 | 0.03 |
| | SANNIX PP-2000 | (g) | 0.23 | 0.23 | 0.23 | 0.23 |
| NCO Index | | (-) | 0.8 | 0.80 | 0.80 | 0.80 |
| PEG ratio | | (%) | 95 | 94 | 94 | 94 |
| Antioxidant | AO-30 | (g) | | 0.1 | - | 0.3 |
| | AO-40 | (g) | - | - | 0.1 | - |
| DSC | Endothermic peak temperature | (°C) | 54 | 55 | 54 | 55 |
| | Enthalpy of fusion | (J/g) | 90 | 93 | 100 | 101 |
| | Exothermic peak temperature | (°C) | 40 | 37 | 39 | 38 |
| | Rate of change ΔH of enthalpy | (%) | 46 | 1 | -1 | 0 |
| Phase state at 80°C (S: solid, L: liquid) | | | S | S | S | S |

Table 2 (continued)

| | | | Example 12 | Example 13 | Example 14 |
|---|---|---|---|---|---|
| Polyol | PEG4000S | (g) | 170.0 | 170.0 | 170.0 |
| Isocyanate | Millionate MT (MDI) | (g) | - | - | - |
| | Millionate MR-200 (p-MDI) | (g) | 10.9 | 13.6 | 13.6 |
| Catalyst | Triethylenediamine | (g) | 0.03 | 0.03 | 0.03 |
| | SANNIX PP-2000 | (g) | 0.23 | 0.23 | 0.23 |
| NCO Index | | (-) | 0.80 | 1.00 | 1.00 |
| PEG ratio | | (%) | 94 | 93 | 93 |

(continued)

| | | | Example 12 | Example 13 | Example 14 |
|---|---|---|---|---|---|
| Antioxidant | AO-30 | (g) | - | 0.1 | 0.3 |
| | AO-40 | (g) | 0.3 | - | - |
| DSC | Endothermic peak temperature | (°C) | 54 | 52 | 51 |
| | Enthalpy of fusion | (J/g) | 95 | 75 | 77 |
| | Exothermic peak temperature | (°C) | 39 | 35 | 35 |
| | Rate of change ΔH of enthalpy | (%) | -2 | -2 | 2 |
| Phase state at 80°C (S: solid, L: liquid) | | | S | S | S |

As can be seen from Table 2, by adding an antioxidant, the rate of change of enthalpy becomes extremely small.

[Evaluation of Heat Storage Construction Material Including Heat Storage Molded Body]

[Example 15]

A simulation of the temperature change suppression effect was performed under the following conditions.

<Molded body>

The phase change material (PCM) of Example 2 was used as a potting material to be filled around a heating element, heating by the heating element was stopped after heat absorption of the phase change material was completed, and a temperature decrease due to an outside air temperature was calculated by simulation.

<Heat storage construction material>

A simulation was performed on a building having underfloor heating using the heat storage material of Example 2 as a heat storage construction material.
For the dimensions of the building, the outer skin area was defined as 300 m$^2$ (floor 10 m × 10 m, height 2.5 m), and the UA value, which is an indicator of the thermal insulation performance of the wall, was defined as 0.38 W/mK. The configuration of the underfloor heating includes a heating element (hot water supply amount 100 L), a heat storage molded body, and a floor material, but in the simulation, these components are treated as one member for simplification, and calculation was performed with anisotropy given to the thermal conductivity.
The heat storage molded body was 800 kg (9.0 m × 9.0 m, thickness 8.23 mm).
A one room model of a cube as shown in Fig. 3 was used for the arrangement in the room.
As the initial temperature, the outside air temperature was 0°C, the heat storage molded body was 42°C, the heating element was 42°C, and the room was 25°C.
The outside air temperature was fixed at 0°C, and after the heating by the heating element was stopped, the temperature change between the floor (including the heat storage molded body and the heating element) and the room was simulated. (Heat insulation performance, UA value = 0.38 W/mK)
The physical properties used for each member in the calculation are as shown in Table 3.

[Table 3]

Table 3

| | | Heat storage molded body |
|---|---|---|
| Specific heat | J/kg·K | 2000 |
| Density | kg/m$^3$ | 1200 |
| Thermal conductivity | W/m·K | 0.3 |

[Example 16]

The calculation conditions were set and the simulation was performed in the same manner as in Example 15 except that the amount of the heat storage molded body was set to 300 kg (thickness: 3.09 mm).

[Example 17]

The calculation conditions were set and the simulation was performed in the same manner as in Example 15 except that the DSC data of the heat storage molded body was shifted by -15°C.

[Example 18]

The calculation conditions were set and the simulation was performed in the same manner as in Example 15 except that the DSC data of the heat storage molded body was shifted by -10°C.

[Example 19]

The calculation conditions were set and the simulation was performed in the same manner as in Example 15 except that the shape of the heat storage molded body was set to (8.0 m × 8.0 m, thickness: 10.42 mm).

[Comparative Example 2]

The calculation conditions were set and the simulation was performed in the same manner as in Example 15 except that the enthalpy of fusion in the heat storage molded body was set to 0 J/g.

[Comparative Example 3]

The calculation conditions were set and the simulation was performed in the same manner as in Example 16 except that the enthalpy of fusion in the heat storage molded body was set to 60 J/g, the endothermic peak was set to 32°C, and the exothermic peak was set to 28°C.

[Comparative Example 4]

The calculation conditions were set and the simulation was performed in the same manner as in Example 15 except that the enthalpy of fusion in the heat storage molded body was set to 0 J/g and the hot water supply amount was set to 370 L.
From the simulation, the results of the average temperature in the building after 3 hours and after 6 hours in Examples 15 to 19 and Comparative Examples 2 to 4 were obtained. The results were shown in Table 4.

[Table 4]

Table 4

|  | Comparative Example 2 | Example 15 | Example 16 | Example 17 |
|---|---|---|---|---|
| Exothermic peak temperature [°C] | - | 40 | 40 | 25 |
| Endothermic peak temperature [°C] | - | 54 | 54 | 39 |
| Enthalpy of fusion (J/g) | - | 90 | 90 | 90 |
| Total enthalpy (kJ) | - | 72000 | 27000 | 72000 |
| Average room temperature after 3 hours [°C] | 6.4 | 24.7 | 22.8 | 17.9 |
| Average room temperature after 6 hours [°C] | 1.3 | 24.7 | 10.6 | 15.4 |

Table 4 (continued)

| | Example 18 | Example 19 | Comparative Example 3 | Comparative Example 4 |
|---|---|---|---|---|
| Exothermic peak temperature [°C] | 30 | 40 | 28 | - |
| Endothermic peak temperature [°C] | 44 | 54 | 32 | - |
| Enthalpy of fusion (J/g) | 90 | 90 | 60 | - |
| Total enthalpy (kJ) | 72000 | 72000 | 48000 | - |
| Average room temperature after 3 hours [°C] | 18.8 | 22.4 | 17.3 | 16.2 |
| Average room temperature after 6 hours [°C] | 18.5 | 22.4 | 10.3 | 9.4 |

[Evaluation of Spacer Including Heat Storage Molded Body]

[Experimental Example A]

A simulation of the temperature rise suppression effect was performed under the following conditions.

<Molded body>

The temperature rise during 2C charging was calculated by simulation when a phase change material, whose enthalpy of fusion begins to appear at 40°C and has a peak at 53°C, was used as a potting material to be filled around a cylindrical cell. Computational fluid dynamics software (product name: STAR-CCM+, Siemens) was used for simulation.

<Battery cell and charging conditions>

The cell dimensions were 21 mm in diameter and 70 mm in height, including 0.3 mm in thickness of the case. Although the contents of the cell are composed of a positive electrode, a negative electrode, a separator, an electrolytic solution, and the like, they were treated as a single member for simplicity in the simulation, and the calculation was performed by giving anisotropy to the thermal conductivity. In the calculation, a 1/6 cake cut model as shown in Fig. 9 was used. Fig. 9 shows a model where the circles represent cells and the space between the cells is filled with a phase change material.

The amount of heat generated in each cell during 2C charging was set to a constant value of 4.4 W for 30 minutes, and the initial temperature of each member constituting the module was set to 35°C. This condition is based on the assumption that charging is performed immediately after the end of operation. The bottom surface of the cell and the bottom of the phase change material (PCM) were assumed to be in contact with the cooling mechanism, with forced convective boundary conditions of a coolant temperature of 30°C and a heat transfer coefficient of 800 W/m$^2$·K. The upper surface was assumed to be a space, with a natural convective boundary of an air temperature of 30°C and a heat transfer coefficient of 10 W/m$^2$·K. The cut surface was a symmetric boundary. In addition, a heat resistance of $1.0 \times 10^{-4}$ m$^2$·K/W was set on the assumption that an insulating sheet is installed on the bottom surface inside the case and the cell contact portion. The "maximum cell temperature difference during charging" was calculated by comparison with the case where no phase change material was used. The physical properties used for each member in the calculation are as shown in Table 5.

[Table 5]

Table 5

| | Battery cell | Case | PCM |
|---|---|---|---|
| Specific heat [J/kg·K] | 1180 | 893 | 2000 |
| Density [kg/m$^3$] | 2530 | 2730 | 1200 |

(continued)

|  | Battery cell | Case | PCM |
|---|---|---|---|
| Thermal conductivity [W/m·k] | Radial direction: 2 | 155 | 0.3 |
|  | 0 direction: 25 |  |  |
|  | Vertical direction: 25 |  |  |

The simulation results are shown in Table 6.

[Table 6]

Table 6

|  | Experimental Example A1 | Experimental Example A2 | Experimental Example A3 | Experimental Example A4 |
|---|---|---|---|---|
| Endothermic peak temperature [°C] | 53 | 53 | 53 | 53 |
| Endothermic onset temperature [°C] | 40 | 40 | 40 | 40 |
| Thermal conductivity [W/m·k) | 0.3 | 0.3 | 0.3 | 0.3 |
| Spacing between the cells [mm] | 0.5 | 1 | 2 | 6 |
| Total endothermic amount [kJ/kg] | 96 | 96 | 96 | 96 |
| Maximum temperature difference [°C] of maximum cell temperature during charging | 1.4 | 2.8 | 3.1 | 2.8 |

From the results of Experimental Examples A1 to A4, the temperature rise suppression effect of the cell during charging by the molded body of the present invention was shown.

[Example B]

A simulation of the temperature rise suppression effect was performed under the following conditions.

<Molded body>

It is the same as Experimental Example A.

<Battery cell and charging conditions>

The same model as in Experimental Example A was used. The same charging conditions as in Experimental Example A were used, except that the upper surface of the cell was assumed to be a space and the air temperature was set to 35°C. The physical properties used for each member in the calculation are as shown in Table 6. The thermal conductivities of the phase change material molded body containing the filler were set to 2.0 W/m·K, 4.0 W/m·K, and 6.0 W/m·K, the charging simulation was performed, and the indexes 1 and 2 were calculated using the average values of the calculation results at the respective thermal conductivities.

[Table 7]

Table 7

| | | Battery cell | Case | PCM (Example) | PCM (Comparative Example) |
|---|---|---|---|---|---|
| Specific heat | J/kg·K | 1180 | 893 | 2000 | 1148.8 |
| Density | kg/m³ | 2530 | 2730 | 1200 | 2000 |
| Thermal conductivity | W/m·K | Radial direction: 2.0  0 direction: 25 Vertical direction: 25 | 155 | 0.3 | 2.0, 4.0, 6.0 |

The above-described simulation was performed using the filler content [vol%] in the phase change material molded body and the latent heat amount [kJ/kg] of the phase change material as variables. As the filler content in the phase change material molded body increases, the proportion occupied by the phase change material in the phase change material molded body decreases, and the latent heat amount of the phase change material molded body decreases. As the latent heat amount of the phase change material increases, the latent heat amount of the phase change material molded body also increases.

<Definition of evaluation index>

The difference between the integrated value of the time during which the average cell temperature was higher than 41°C from the start of 2C charging to the elapse of 10 minutes and the value in the comparative example was set as index 1. The smaller index 1 means that the time at the temperature at which the deterioration of the cell is accelerated in the initial stage of charging is shorter.

The difference between the average cell temperature after the completion of 2C charging and that of the comparative example was set as index 2. The lower index 2 means that the cell is not in a high temperature state in which the deterioration of the cell is accelerated at the time of the completion of the charging.

<Evaluation criteria>

Using the index 1 and the index 2, the effect of suppressing a temperature rise during charging was evaluated.
When the index 1 was less than -200 seconds, the score was 3, when the index 1 was less than -150 seconds and -200 seconds or more, the score was 2, and when the index 1 was less than -100 seconds and -150 seconds or more, the score was 1.
When the index 2 was lower than -1.5°C, the score was 1.
The effect of suppressing a temperature rise during charging was evaluated using the total score of the scores of the index 1 and the index 2 as an evaluation value. A higher evaluation value indicates a greater effect of suppressing a temperature rise during charging.

<Evaluation results>

[Table 8]

Table 8

| | Filler content in heat storage material | Latent heat amount of polymer in heat storage material | Latent heat amount of heat storage material | Index 1 | Index 2 | Index 1 (Difference from Comparative Example 1) | Index 2 (Difference from Comparative Example 1) | Evaluation |
|---|---|---|---|---|---|---|---|---|
| Example B1 | 40 | 50 | 30 | 216 | 49.05 | -119 | -2.54 | 2 |
| Example B2 | 40 | 100 | 60 | 46.5 | 48.28 | -223 | -1.58 | 4 |
| Example B3 | 40 | 300 | 180 | 0 | 44.63 | -191 | 1.19 | 2 |

(continued)

| | Filler content in heat storage material | Latent heat amount of polymer in heat storage material | Latent heat amount of heat storage material | Index 1 | Index 2 | Index 1 (Difference from Comparative Example 1) | Index 2 (Difference from Comparative Example 1) | Evaluation |
|---|---|---|---|---|---|---|---|---|
| Comparative Example B1 | 0 | 50 | 50 | 335 | 51.59 | - | - | - |

<Consideration>

Since the evaluation value was 2 or more in any of Examples B1 to B3, it was shown that the addition of the filler to the phase change material molded body has an effect of suppressing a temperature rise during charging.

When the latent heat amount of the phase change material was 100 kJ/kg, the evaluation value was 4, and the effect of suppressing a temperature rise during charging was particularly high.

As the filler content in the phase change material molded body increases, the thermal conductivity of the phase change material molded body increases and there is an effect of promoting heat radiation to the cooling surface of the cell, while the proportion of the phase change material in the phase change material molded body is decreased and the endothermic amount of the phase change material molded body is decreased.

The results of Examples B1 to B3 show that the addition of the filler to the phase change material molded body has an effect of suppressing the temperature rise during charging in the tradeoff relationship between the promotion of heat radiation to the cooling surface of the cell and the reduction of the endothermic amount of the phase change material molded body.

[Experimental Example C]

A simulation of the potting process was performed under the following conditions.

<Molded body>

Assuming that the potting material (composition) was a fluid having a constant viscosity, when the fluid was allowed to flow into a pack in which cylindrical batteries were arranged, the behavior of the fluid filling the pack while passing between the cylindrical batteries was calculated by a three dimensional flow simulation. The density of the fluid was set to 998 kg/m$^3$.

<Battery cell and flow conditions>

The cell dimensions were 46 mm in diameter and 80 mm in height. The cell includes a case, a positive electrode, a negative electrode, a separator, an electrolytic solution, and the like, but in the simulation, the components were treated as a single member for simplicity, and calculation was performed.

In the calculation, a model in which four cylindrical batteries such as 400 in Fig. 12 were arranged was used. In 400 of Fig. 12, the cylinder represents the cell, and the small circular portion represents an inflow port of a resin. The side wall surface and the bottom surface closest to the inflow port of the fluid were treated as wall surfaces, and the remaining three side wall surfaces were symmetrical boundaries. The ceiling surface is the boundary through which the air in the pack flows out, representing the state in which the ceiling surface is open.

The fluid was allowed to flow in from the inflow port at a constant flow rate, and when the upper surface of the fluid reached the height of the cell somewhere, the calculation was terminated, and the angle θ1 of the gradient in Fig. 14 was calculated.

The above-described simulation was performed by using, as variables, the filling volume flow rate (m$^3$/s) of the fluid from the inflow port, the viscosity (Pa·s) of the fluid (composition), and the minimum value (m) of the distance between batteries disposed in the housing.

<Definition of Index>

F was defined by equation (1), which is defined by the viscosity of the fluid (Pa·s), the filling volume flow rate (m³/s) and the minimum value (m) of the distance between batteries disposed in the housing.

$$F = (\text{viscosity of fluid})^{0.53} \times (\text{filling volume flow rate})^{0.62}/(\text{minimum value of distance between a plurality of batteries disposed in housing})^{1.3} \qquad (1).$$

In a case where the filled potting material reaches the upper surface of the assembled battery, the composition can no longer be filled at a constant flow rate, and the total filling time becomes long. The simulation results are shown in Table 9.

[Table 9]

Table 9

| | Filling volume flow rate [x 10⁻⁶ m³/s] | Viscosity of composition [× 10⁻² Pa·s] | Distance between battery centers [× 10⁻³ m] | Parameter F | Angle θ [°] |
|---|---|---|---|---|---|
| Experimental Example C1 | 1.96 | 0.01 | 4.00 | 0.03 | 0.39 |
| Experimental Example C2 | 1.96 | 0.05 | 4.00 | 0.08 | 0.40 |
| Experimental Example C3 | 0.98 | 0.03 | 2.00 | 0.10 | 0.57 |
| Experimental Example C4 | 1.96 | 0.03 | 4.00 | 0.06 | 0.80 |
| Experimental Example C5 | 1.96 | 0.01 | 2.00 | 0.08 | 1.17 |
| Experimental Example C6 | 1.96 | 0.12 | 2.00 | 0.30 | 1.92 |
| Experimental Example C7 | 0.98 | 0.10 | 2.00 | 0.18 | 1.95 |
| Experimental Example C8 | 1.96 | 0.10 | 2.00 | 0.28 | 2.05 |
| Experimental Example C9 | 0.20 | 1.00 | 2.00 | 0.22 | 2.17 |
| Experimental Example C10 | 1.96 | 0.20 | 2.00 | 0.40 | 2.86 |
| Experimental Example C11 | 1.96 | 0.10 | 4.00 | 0.11 | 3.39 |
| Experimental Example C12 | 1.96 | 0.10 | 4.00 | 0.11 | 3.53 |
| Experimental Example C13 | 1.96 | 0.27 | 4.00 | 0.19 | 4.72 |
| Experimental Example C14 | 0.20 | 0.50 | 2.00 | 0.16 | 5.56 |
| Experimental Example C15 | 1.96 | 0.50 | 4.00 | 0.26 | 9.02 |
| Experimental Example C16 | 0.98 | 1.00 | 4.00 | 0.25 | 9.04 |
| Experimental Example C17 | 1.96 | 1.00 | 4.00 | 0.38 | 10.4 |
| Experimental Example C18 | 1.96 | 0.23 | 2.00 | 0.42 | 12.0 |
| Experimental Example C19 | 1.96 | 0.25 | 2.00 | 0.45 | 14.1 |
| Experimental Example C20 | 0.20 | 5.00 | 2.00 | 0.53 | 16.7 |
| Experimental Example C21 | 1.96 | 0.64 | 2.00 | 0.74 | 20.3 |
| Experimental Example C22 | 1.96 | 5.00 | 4.00 | 0.89 | 22.9 |
| Experimental Example C23 | 1.96 | 0.84 | 2.00 | 0.85 | 23.7 |
| Experimental Example C24 | 1.96 | 1.29 | 2.00 | 1.07 | 25.6 |
| Experimental Example C25 | 1.96 | 1.35 | 2.00 | 1.10 | 26.6 |

(continued)

| | Filling volume flow rate [x $10^{-6}$ $m^3$/s] | Viscosity of composition [$\times$ $10^{-2}$ Pa·s] | Distance between battery centers [$\times 10^{-3}$ m] | Parameter F | Angle $\theta$ [°] |
|---|---|---|---|---|---|
| Experimental Example C26 | 1.96 | 10.00 | 4.00 | 1.29 | 35.1 |
| Experimental Example C27 | 0.98 | 5.00 | 2.00 | 1.43 | 37.9 |
| Experimental Example C28 | 1.96 | 8.43 | 4.00 | 1.17 | 32.0 |

The threshold $\theta2$ of the angle $\theta1$ of the gradient is calculated from the shape of the battery pack. Specifically, the threshold $\theta2$ of the angle $\theta1$ of the gradient depends on a distance 880 between 840 and 850 and a distance 890 between 850 and 860, and is defined by the following Equation (2). Table 10 shows an example of the relationship between $\theta1$ calculated from Equation (2) and the length of the long side of the housing.

$$\text{(Angle of gradient: } \theta2) = \arctan(\text{distance between 840 and 850})/(\text{distance between 850 and 860}) \times 180°/\pi \qquad (2)$$

From the results of Experimental Examples C1 to C28 shown in Table 9, it was derived that there is a relationship of Equation (3) and Equation (4) between the F and the angle $\theta1$ of the gradient. By adjusting the value of F so that the value of the angle $\theta1$ of the gradient becomes smaller in consideration of the relationship of Equation (2), Equation (3), and Equation (4), it is possible to adjust the filling condition so that the inside of the housing is filled in a shorter time.

(when $0° \leq \theta1 < 3°$)

$$F = 1.31 \times 10^{-1} \times \text{(the angle of the gradient formed by the potting material with respect to the bottom surface of the battery pack at the time of filling: } \theta1) - 1.44 \times 10^{-2} \qquad (3)$$

(When $3° \leq \theta1$)

$$F = 3.93 \times 10^{-2} \times \text{(the angle of the gradient formed by the potting material with respect to the bottom surface of the battery pack at the time of filling: } \theta1) - 5.02 \times 10^{-2} \qquad (4)$$

[Table 10]

Table 10

| Cell height [mm] | Cell housing long side [mm] | Angle of gradient: $\theta$ [°] | Cell height [mm] | Cell housing long side [mm] | Angle of gradient: 0 [°] |
|---|---|---|---|---|---|
| 80 | 300 | 28.1 | 160 | 300 | 46.8 |
| 80 | 600 | 14.9 | 160 | 600 | 28.1 |
| 80 | 900 | 10.1 | 160 | 900 | 19.6 |
| 80 | 1200 | 7.6 | 160 | 1200 | 14.9 |
| 80 | 1500 | 6.1 | 160 | 1500 | 12.0 |
| 80 | 1800 | 5.1 | 160 | 1800 | 10.1 |
| 80 | 2100 | 4.4 | 160 | 2100 | 8.7 |
| 80 | 2400 | 3.8 | 160 | 2400 | 7.6 |
| 80 | 2700 | 3.4 | 160 | 2700 | 6.8 |
| 80 | 3000 | 3.1 | 160 | 3000 | 6.1 |
| 80 | 3300 | 2.8 | 160 | 3300 | 5.5 |
| 80 | 3600 | 2.5 | 160 | 3600 | 5.1 |

(continued)

| Cell height [mm] | Cell housing long side [mm] | Angle of gradient: θ [°] | | Cell height [mm] | Cell housing long side [mm] | Angle of gradient: 0 [°] |
|---|---|---|---|---|---|---|
| 80 | 3900 | 2.3 | | 160 | 3900 | 4.7 |
| 80 | 4200 | 2.2 | | 160 | 4200 | 4.4 |
| 80 | 4500 | 2.0 | | 160 | 4500 | 4.1 |
| 80 | 4800 | 1.9 | | 160 | 4800 | 3.8 |

Industrial Applicability

According to the present invention, it is possible to provide a polyurethane for a heat storage material, which has good heat storage properties and heat resistance without containing an additive or the like having a heat storage function, is excellent in moldability, and has good shape retainability against heating and cooling, a heat storage material containing the polyurethane, and a heat storage molded body.

The present invention is particularly useful as a material for a heat storage construction material and the like, and has a high industrial value.

Reference Signs List

    10: Floor material
    20: Heat storage molded body
    30: Heating element (hot water supply pipe)
    1: Partition member
    100: Assembled Battery
    110: Containing material
    120: Exterior material
    200: Unit cell
    210: Terminal
    220: Terminal
    300: Housing
    300a: Side plate
    300b: Side plate
    300c: Side plate
    300d: Side plate
    300e: Bottom plate
    301: Bus bar
    1A: Heat transfer plate
    400: Cylindrical battery (unit cell)
    500: Housing
    600: Composition (before curing)
    610: Polyurethane, polyurethane composition for heat storage material, heat storage molded body (after curing)
    700: Battery pack
    800: Nozzle
    810: Ceiling surface of assembled battery
    820: Bottom surface of assembled battery
    830: Nozzle tip point
    840: Foot of perpendicular line from 830 to 810
    850: Foot of perpendicular line from 830 to 820
    860: Foot of perpendicular line from 840 to 870
    870: Bisecting plane of battery pack
    880: Distance between 840 and 850
    890: Distance between 850 and 860
    900: Cylindrical battery closest from 830 in the long side direction

910: Angle of gradient
920: Threshold angle

**Claims**

1. A polyurethane comprising a structural unit (A) derived from an aromatic compound comprising an isocyanate group with an average number of functional groups of 2.1 or more and a structural unit (B) derived from a polyalkylene ether glycol, wherein the polyurethane comprises an exothermic peak temperature at 0 to 50°C.

2. The polyurethane according to claim 1, wherein the structural unit (B) comprises a structural unit having a linear structure and having no unsaturated bond.

3. The polyurethane according to claim 1, wherein the weight fraction of the structural unit (B) is 50% by weight or more and 99% by weight or less based on the total weight of the structural units (A) and (B).

4. The polyurethane according to claim 1, wherein the structural unit (B) comprises a number-average molecular weight in a range of 1,000 or more and 10,000 or less.

5. The polyurethane according to claim 1, wherein the polyurethane comprises an endothermic phase transition during temperature raising from 30°C to 90°C.

6. The polyurethane according to claim 1, wherein the polyurethane comprises an endothermic phase transition during temperature raising from 30°C to 90°C, and the enthalpy of fusion at the phase transition is 50 J/g or more.

7. The polyurethane according to claim 1, wherein the structural unit (A) comprises a polymethylene polyphenyl polyisocyanate structural unit.

8. The polyurethane according to claim 1, wherein a ratio of an isocyanate group equivalent (II) of the structural unit (A) to a hydroxy group equivalent (I) of the structural unit (B) is $0.4 \leq (II)/(I) \leq 1.2$.

9. The polyurethane according to claim 1, wherein the polyurethane comprises a density of 1.0 to 10 g/cm$^3$.

10. The polyurethane according to claim 1, wherein the polyurethane comprises a thermal conductivity of 0.2 to 5.0 W/(m·K).

11. The polyurethane according to claim 1, further comprising an antioxidant.

12. A method for producing a polyurethane, comprising mixing an aromatic compound comprising an isocyanate group with an average number of functional groups of 2.1 or more, a polyalkylene ether glycol, and a catalyst to obtain a polyurethane.

13. A heat storage material comprising the polyurethane according to any one of claims 1 to 11.

14. An assembled battery comprising a plurality of unit cells and the polyurethane according to any one of claims 1 to 11 in contact with the unit cells.

15. A construction material comprising the polyurethane according to any one of claims 1 to 11.

Fig. 1

Fig, 2

Fig. 3

Fig. 4

Fig. 5

Fig. 6

Fig. 7

Fig. 8

Fig. 9

Fig. 10

400    500    600, 610    700

800

Fig. 11

Fig. 12

Fig. 13

Fig. 14

## INTERNATIONAL SEARCH REPORT

| International application No. |
|---|
| **PCT/JP2024/003121** |

### A. CLASSIFICATION OF SUBJECT MATTER

*C09K 5/02*(2006.01)i; *C08G 18/20*(2006.01)i; *C08G 18/48*(2006.01)i; *C08G 18/76*(2006.01)i; *C09K 5/06*(2006.01)n

FI: C09K5/02; C08G18/20; C08G18/48; C08G18/48 033; C08G18/76; C08G18/76 057; C09K5/06 J

According to International Patent Classification (IPC) or to both national classification and IPC

### B. FIELDS SEARCHED

Minimum documentation searched (classification system followed by classification symbols)

C09K5/02; C08G18/20; C08G18/48; C08G18/76; C09K5/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2023-10510 A (TOHO CHEMICAL INDUSTRIES CO., LTD.) 20 January 2023 (2023-01-20)<br>claims 1-10, paragraphs [0001]-[0002], [0013], [0028], [0033], [0036]-[0045], table 3, examples 1-8, 11-12 | 1-2, 4-7, 9-12 |
| A | | 3, 8, 13-15 |
| A | JP 2022-44692 A (HUAWEI TECHNOLOGIES CO., LTD.) 17 March 2022 (2022-03-17)<br>claims 1-10 | 1-15 |
| A | JP 2022-31785 A (NIPPON STEEL COATED SHEET CORP.) 22 February 2022 (2022-02-22)<br>claims 1-11 | 1-15 |
| A | JP 2020-88176 A (TOYO INK SC HOLDINGS CO., LTD.) 04 June 2020 (2020-06-04)<br>claims 1-5 | 1-15 |
| A | JP 2018-514052 A (GLOBAL WEB HORIZONS LLC) 31 May 2018 (2018-05-31)<br>claims 1-60 | 1-15 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/003121** |

### C. DOCUMENTS CONSIDERED TO BE RELEVANT

| Category* | Citation of document, with indication, where appropriate, of the relevant passages | Relevant to claim No. |
| --- | --- | --- |
| A | JP 61-233904 A (ASSOCIATION POUR LA RECHERCHE ET LE DEVELOPPEMENT DES METHODES ET PROCESSUS INDUSTRIELS "ARMINES") 18 October 1986 (1986-10-18)<br>claims 1-11 | 1-15 |
| A | CN 204311581 U (HEBEI ENNOVA BUILDING MATERIAL TECHNOLOGY CO., LTD.) 06 May 2015 (2015-05-06)<br>claims 1-4 | 1-15 |

Form PCT/ISA/210 (second sheet) (July 2022)

## INTERNATIONAL SEARCH REPORT
### Information on patent family members

International application No.

**PCT/JP2024/003121**

| Patent document cited in search report | | | Publication date (day/month/year) | Patent family member(s) | | | Publication date (day/month/year) |
|---|---|---|---|---|---|---|---|
| JP | 2023-10510 | A | 20 January 2023 | (Family: none) | | | |
| JP | 2022-44692 | A | 17 March 2022 | US | 2020/0150732 | A1 | |
| | | | | claims 1-33 | | | |
| | | | | WO | 2018/119925 | A1 | |
| | | | | EP | 3554203 | A1 | |
| | | | | CN | 109564911 | A | |
| JP | 2022-31785 | A | 22 February 2022 | (Family: none) | | | |
| JP | 2020-88176 | A | 04 June 2020 | (Family: none) | | | |
| JP | 2018-514052 | A | 31 May 2018 | WO | 2016/126817 | A1 | |
| | | | | claims 1-60 | | | |
| | | | | US | 2016/0226042 | A1 | |
| | | | | EP | 3254331 | A1 | |
| | | | | TW | 201703343 | A | |
| | | | | CN | 107210499 | A | |
| | | | | KR | 10-2017-0108156 | A | |
| JP | 61-233904 | A | 18 October 1986 | EP | 185596 | A1 | |
| | | | | FR | 2575173 | A | |
| | | | | ES | 550206 | A | |
| CN | 204311581 | U | 06 May 2015 | (Family: none) | | | |

Form PCT/ISA/210 (patent family annex) (July 2022)

**EP 4 660 276 A1**

**Patent documents cited in the description**

- JP 2014129467 A
- JP 2019001973 A
- JP 2009079115 A
- JP 2020066738 A
- JP 2000240958 A